# EUROPÄISCHE PATENTSCHRIFT

(11) **EP 3 621 845 B1**
(45) Veröffentlichungstag und Bekanntmachung des Hinweises auf die Patenterteilung: **18.10.2023**
(21) Anmeldenummer: 18725448.7
(22) Anmeldetag: 09.05.2018
(51) Int. Cl.: B60L 53/12, B60L 53/126, B60L 53/14, B60L 53/36, B60L 53/66

(54) **VERFAHREN UND SYSTEME ZUM ENERGIEAUSTAUSCH ZWISCHEN FAHRZEUGEN**
METHOD AND SYSTEMS FOR ENERGY EXCHANGE BETWEEN VEHICLES
PROCÉDÉ ET SYSTÈMES POUR L'ÉCHANGE D'ÉNERGIE ENTRE VÉHICULES

(30) Priorität: 10.05.2017 DE 102017207926
(43) Veröffentlichungstag der Anmeldung: 18.03.2020
(73) Patentinhaber: Freie Universität Berlin, 14195 Berlin (DE)
(72) Erfinder: LANDGRAF, Tim, 15526 Bad Saarow (DE)
(74) Vertreter: Maikowski & Ninnemann Patentanwälte Partnerschaft mbB
(86) Internationale Anmeldenummer: PCT/EP2018/062082
(87) Internationale Veröffentlichungsnummer: WO 2018/206684

(56) Entgegenhaltungen:
- DE-A1-102012 214 750
- JP-A- 2010 035 333
- US-A1- 2014 089 064
- US-A1- 2014 188 318
- US-A1- 2016 129 793
- Leopold Summerer ET AL: "Concepts for wireless energy transmission via laser", , 8. November 2012 (2012-11-08), XP055503517, Gefunden im Internet: URL:https://www.esa.int/gsp/ACT/doc/POW/AC T-RPR-NRG-2009-SPS-ICSOS-concepts-for-lase r-WPT.pdf [gefunden am 2018-08-30]
- SEGATA MICHELE ET AL: "On platooning control using IEEE 802.11p in conjunction with visible light communications", 2016 12TH ANNUAL CONFERENCE ON WIRELESS ON-DEMAND NETWORK SYSTEMS AND SERVICES (WONS), IFIP, 20 January 2016 (2016-01-20), pages 1-4, XP032878398, [retrieved on 2016-03-08]
- CARUNTU CONSTANTIN F ET AL: "Distributed model predictive control for vehicle platooning: A brief survey", 2016 20TH INTERNATIONAL CONFERENCE ON SYSTEM THEORY, CONTROL AND COMPUTING (ICSTCC), IEEE, 13 October 2016 (2016-10-13), pages 644-650, XP033024277, DOI: 10.1109/ICSTCC.2016.7790739 [retrieved on 2016-12-16]
- LE HONG QUY ET AL: "Communication protocol for platoon of electric vehicles in mixed traffic scenarios", 2016 IEEE 27TH ANNUAL INTERNATIONAL SYMPOSIUM ON PERSONAL, INDOOR, AND MOBILE RADIO COMMUNICATIONS (PIMRC), IEEE, 4 September 2016 (2016-09-04), pages 1-5, XP033035229, DOI: 10.1109/PIMRC.2016.7794597 [retrieved on 2016-12-21]

## Beschreibung

Die Erfindung betrifft Verfahren und Systeme zum Austausch elektrischer Energie zwischen sich bewegenden, elektrisch angetriebenen Fahrzeugen sowie ein zur Verwendung in einem solchen Verfahren und/oder System ausgebildetes elektrisch angetriebenes Fahrzeug.

Elektrisch angetriebene Fahrzeuge (auch als Elektrofahrzeuge bezeichnet) umfassen einen oder mehrere, mit Rädern des Fahrzeugs wirkverbundene(n) Elektromotor(en), um das Fahrzeug anzutreiben. Die elektrische Energie wird von einem elektrischen Energiespeicher des Fahrzeugs an den oder die Elektromotoren bereitgestellt. Als Energiespeicher dient regelmäßig ein Akkumulator.

Elektrofahrzeuge sind oft leichter, einfacher wartbar, energieeffizienter, leiser und sauberer als mit Brennstoffen betriebene Fahrzeuge. Immer mehr Modelle von Elektrofahrzeugen sind kommerziell verfügbar. Dennoch machen Elektrofahrzeuge bislang nur einen geringen Anteil der Neuzulassungen aus. Eine große Hürde in der Verbreitung von Elektrofahrzeugen ist die begrenzte Kapazität des Akkumulators (auch Traktionsbatterie genannt) und die damit einhergehende geringe Reichweite der Fahrzeuge. Zudem ist ein Ladevorgang an einer Ladestation zeitaufwändig und die Dichte von Ladestationen ist gering, sodass zum Aufladen regelmäßig Umwege in Kauf genommen werden müssen.

Die US 2014/0089064 A1 beschreibt Systeme und Verfahren zum Übertragen von elektrischer Energie zwischen Fahrzeugen. Hierbei wird eine Fernsteuerung eines Fahrzeugs durch das andere Fahrzeug beschrieben, sowie eine mechanische Kupplung.

Die US 2016/0129793 A1 betrifft einen drahtlosen Energieaustausch zwischen Fahrzeugen. Dabei kann zumindest eines der Fahrzeuge eine mobile Ladestation sein.

Leopold Summerer, ESA: "Concepts for Wireless Energy Transmission via Laser", 8. November 2012, beschreibt Konzepte zur drahtlosen Energieübertragung mittels Laser.

Le Hong Quy et al.: "Communication Protocol for Platoon of Electric Vehicles in Mixed Traffic Scenarios", 2016 IEEE 27th Annual International Symposium on Personal, Indoor, and Mobile Radio Communications (PIMRC), IEEE, 4. September 2016, behandeln ein Protokoll für eine Fahrzeug-zu-Fahrzeug-Kommunikation.

Caruntu Constantin F. et al.: "Distributed Model Predictive Control for Vehicle Platooning: A brief Survey", 2016 20th International Conference on System Theory, Control and Computing (ICSTCC), IEEE, 13. Oktober 2016, geben eine Übersicht über die Steuerung von Fahrzeugzügen.

M. Segata et al.: "On Platooning Control using IEEE 802.11 p in Conjunction with Visible Light Communications" beschreibt die Übermittlung einer Geschwindigkeit und einer Beschleunigung über eine drahtlose Datenkommunikation und die Nachahmung einer Motorträgheit bei dem die Daten empfangenden Fahrzeug mittels eines Tiefpassfilters.

Der Erfindung liegt das Problem zugrunde, die Reichweite von elektrisch angetriebenen Fahrzeugen zu vergrößern.

Das genannte Problem wird durch ein Verfahren zum Austausch von elektrischer Energie zwischen zwei oder mehr elektrisch angetriebenen Fahrzeugen (insbesondere während der Fahrt) gemäß Anspruch 1 gelöst, durch ein System zum Austausch von elektrischer Energie zwischen zwei oder mehr (insbesondere sich bewegenden) elektrisch angetriebenen Fahrzeugen gemäß Anspruch 7 und durch ein elektrisch angetriebenes Fahrzeug nach Anspruch 14.

ist der Abstand beispielsweise zunächst größer als der Höchstabstand, so wird er durch die Regelung reduziert, bis er kleiner als der Höchstabstand ist. Während der Abstand (insbesondere bei der Bewegung beider Fahrzeuge) größer als der Mindestabstand und kleiner als der Höchstabstand ist, wird elektrische Energie vom Energiespeicher des ersten Fahrzeugs an den Energiespeicher des zweiten Fahrzeugs übertragen, z.B. mittels einer Kopplungsvorrichtung zur elektrischen Kopplung der Energiespeicher beider Fahrzeuge miteinander.

Es kann vorgesehen sein, dass das erste Fahrzeug entlang einer ersten Route bewegt wird oder entlang der ersten Route bewegt werden soll und das zweite Fahrzeug entlang einer zweiten Route bewegt wird oder entlang der zweiten Route bewegt werden soll. Die erste und die zweite Route sind voneinander verschieden. Daraufhin werden die erste Route und/oder die zweite Route derart geändert, dass beide Routen nach der Änderung zumindest entlang eines Routenabschnitts oder entlang eines verlängerten Routenabschnitts übereinstimmen (falls sie etwa bereits zuvor entlang eines kürzeren Routenabschnitts übereinstimmten). Daraufhin wird das erste Fahrzeug entlang der ersten Route oder der geänderten ersten Route gesteuert und das zweite Fahrzeug wird entlang der zweiten Route oder der geänderten zweiten Route gesteuert, und zwar jeweils derart, dass sich die beiden Fahrzeuge entlang des übereinstimmenden Routenabschnitts in einem Anstand zueinander bewegen, der kleiner ist als ein vorgegebener Höchstabstand. Während sich beide Fahrzeuge entlang des übereinstimmenden Routenabschnitts bewegen (insbesondere in dem Abstand zueinander entlang des übereinstimmenden Routenabschnitts gesteuert werden) wird elektrische Energie (z.B. eine vorgegebene Menge) zwischen den Fahrzeugen ausgetauscht, insbesondere vom Energiespeicher des ersten Fahrzeugs an den Energiespeicher des zweiten Fahrzeugs übertragen. Dabei wird der Energiespeicher des ersten Fahrzeugs insbesondere teilweise entladen und der Energiespeicher des zweiten Fahrzeugs wird teilweise oder vollständig geladen.

Der Höchstabstand ist z.B. derjenige Abstand, bis zu dem mittels einer elektrischen Kopplungsvorrichtung der Fahrzeuge elektrische Energie übertragbar ist, z.B. durch elektrische Kontaktierung und/oder durch induktive Kopplung.

Die erste und die zweite Route sind insbesondere in jeweils einem Navigationssystem jedes der Fahrzeuge programmierte Routen. Die Routen geben eine entlangzufahrende Strecke über eine oder mehrere Straßen (oder andere befahrbare Wege) vor. Weist eine Straße mehrere Fahrspuren auf, geben die Routen optional auch die Fahrspur vor. Die Routen können Zeitinformationen umfassen, z.B. vorgeben, zu welchem Zeitpunkt das jeweilige Fahrzeug einen bestimmten Punkt auf der Route passieren soll. Die Routen erstrecken sich jeweils von einem Startpunkt bis zu einem Zielpunkt. Im Straßenverkehr existieren regelmäßig mehrere mögliche Routen zwischen denselben Start- und Zielpunkten. Bei einer Änderung der ersten und/oder der zweiten Route kann vorgesehen sein, dass die Start- und Zielpunkte der ersten und/oder der zweiten Route unverändert bleiben, sich aber die geänderte Route über andere Straßen erstreckt als die ursprüngliche Route. Alternativ oder zusätzlich umfasst die Änderung der ersten und/oder zweiten Route eine Änderung der Zeitinformation der ersten und/oder der zweiten Route. Somit ist es möglich, eine geänderte Route dadurch bereitzustellen, dass das Fahrzeug einen bestimmten Punkt auf der Route zu einem anderen Zeitpunkt passiert als in der ursprünglichen Route vorgesehen. Insbesondere ist es möglich, die Route eines der Fahrzeuge oder beider Fahrzeuge nicht räumlich sondern nur in zeitlicher Hinsicht zu ändern. Alternativ wird/werden eine oder beide Routen nur räumlich geändert. Wieder alternativ wird/werden eine oder beide Routen sowohl zeitlich als auch räumlich geändert.

Ist ein Energiespeicher vollständig geladen, kann er keine Energie aufnehmen. Ist er vollständig entladen, kann er keine Energie abgeben. Im Regelfall weist der Energiespeicher der Fahrzeuge einen Ladestand auf, der zwischen einer vollständigen Ladung und einer vollständigen Entladung liegt, sodass ein solcher Energiespeicher sowohl Energie aufnehmen kann als auch abgeben kann. Das Verfahren kann vorsehen, dass nur ein solches erstes Fahrzeug bereitgestellt wird, dessen Energiespeicher einen Ladestand aufweist, der oberhalb eines vorgegebenen Schwellenwerts liegt. Beispielsweise liegt der Schwellenwert oberhalb eines (z.B. anhand von Informationen bezüglich der Route berechneten) Ladestands, bei dem der Energiespeicher ausreichend elektrische Energie speichert, um das erste Fahrzeug entlang der ersten Route (und/oder entlang der geänderten ersten Route) anzutreiben. Alternativ oder zusätzlich sieht das Verfahren vor, dass nur ein solches zweites Fahrzeug bereitgestellt wird, dessen Energiespeicher einen Ladestand aufweist, der unterhalb eines weiteren Schwellenwerts liegt. Der weitere Schwellenwert liegt beispielsweise unterhalb eines (z.B. anhand von Informationen bezüglich der Route berechneten) Ladestands, bei dem der Energiespeicher nicht ausreichend elektrische Energie speichert, um das zweite Fahrzeug entlang der zweiten Route (und/oder entlang der geänderten zweiten Route) anzutreiben. Beispielsweise ist der Zielpunkt der zweiten Route die zum zweiten Fahrzeug nächstgelegene Ladestation, die geeignet ist, den Energiespeicher des zweiten Fahrzeugs aufzuladen. Die Bereitstellung des ersten und/oder des zweiten Fahrzeugs umfasst optional eine Auswahl aus einer Vielzahl von Fahrzeugen.

Bei dem Verfahren kann vorgesehen sein, dass zwischen den Fahrzeugen und/oder zwischen den Fahrzeugen und einer Zentrale Informationen und/oder Anfragen ausgetauscht werden. Die Informationen betreffen z.B. die Ladestände der Energiespeicher der Fahrzeuge und/oder eine oder beide der ersten und der zweiten Route. Eine Anfrage fordert z.B. einen Ladevorgang an. Die Änderung der ersten und/oder der zweiten Route kann auf Basis der ausgetauschten Informationen erfolgen. Die Änderung der ersten und/oder der zweiten Route können beide Fahrzeuge jeweils für sich durchführen. Alternativ führt eines der Fahrzeuge oder die Zentrale die Änderung der ersten und/oder der zweiten Route durch und sendet die erste und/oder die zweite Route an das erste und/oder das zweite Fahrzeug.

Das beschriebene Verfahren ist inspiriert durch das Sozialverhalten von Honigbienen. Sammlerinnen, die erfolglos von der Futtersuche zurück zur Kolonie gelangen, können durch ein Kommunikationssignal von anderen Bienen Nektar oder Honig erhalten. Auf elektrisch angetriebene Fahrzeuge angewendet ist die Idee, während der Fahrt zwei oder mehr Fahrzeuge so zusammenzubringen, dass sie sich gegenseitig laden können. Da dies während der Fahrt geschieht, spart das Zeit und erweitert die Reichweite des Energie annehmenden Fahrzeugs. Im Unterschied zum bekannten Aufladen von Elektrofahrzeugen an Ladestationen oder mittels in der Fahrbahn eingebrachten Ladeeinrichtungen ist bei dem beschriebenen Verfahren ein Peer-to-Peer-Austausch von Energie vorgesehen. Die Elektrofahrzeuge tauschen untereinander überschüssige Energie aus.

Das erste und/oder das zweite Fahrzeug können zur Personen- und/oder Lastenbeförderung dienen, insbesondere ein Personenkraftwagen (PKW) sein.

Bevorzugt ist das erste und/oder das zweite Fahrzeug als teilautonom oder autonom fahrende(s) Fahrzeug(e) ausgebildet. Autonom fahrende Fahrzeuge werden manchmal auch als selbstfahrende Fahrzeuge bezeichnet. Ein autonom fahrendes Fahrzeug kann ohne Einfluss eines menschlichen Fahrers steuern, insbesondere entlang einer vorgegebenen Route. Ein teilautonom fahrendes Fahrzeug kann bestimmte Aufgaben ohne Einfluss eines menschlichen Fahrers ausführen, insbesondere entlang bestimmten Arten von Routen steuern, wie etwa Routen, die nur über Schnellstraßen oder durch einen Stau führen. Viele Automobilhersteller und Unternehmen der Digitalwirtschaft entwickeln und betreiben Fahrzeuge, die bereits heute vollständig autonom fahren und teilweise auch kommerziell zur Personenbeförderung eingesetzt werden. Teilautonome Fahrzeuge sind kommerziell erhältlich. Bei autonom fahrenden Fahrzeugen ist für jede Fahrt von einem Startpunkt zu einem Zielpunkt schon vor der Abfahrt eine Route planbar. Die Route kann, insbesondere von der Zentrale, räumlich und zeitlich so optimiert (und dabei geändert) werden, dass sich Paare von Fahrzeugen auf einem Routenstück zusammenfinden. Besonders effiziente Algorithmen für eine derartige Optimierung von Routen sind bekannt, z.B. im Zusammenhang mit der Beförderung mehrerer Fahrgäste mit unterschiedlichen Start- und Zielpunkten mittels desselben Fahrzeugs. Eine besonders einfache Möglichkeit besteht darin, mehrere mögliche geänderte Routen zu ermitteln, miteinander zu vergleichen und die beste Route oder die besten Routen auszuwählen. Das erste oder zweite Fahrzeug kann auf seinem Weg zum Zielpunkt (gleichzeitig oder nacheinander) mit mehreren zweiten/ersten Fahrzeugen räumlich und zeitlich zusammengeführt werden.

Das Steuern der Fahrzeuge entlang der geänderten Routen kann ein Abbremsen, ein Beschleunigen und/oder ein Anhalten des ersten und/oder des zweiten Fahrzeugs umfassen, um die beiden Fahrzeuge zusammenzuführen, insbesondere sie entlang des übereinstimmenden Routenabschnitts mit dem Abstand zueinander kleiner als der vorgegebene Höchstabstand zu steuern.

Ein drittes Fahrzeug, insbesondere ebenfalls ein elektrisch angetriebenes und/oder autonom oder teilautonom fahrendes Fahrzeug, kann sich in einem Zwischenraum zwischen dem ersten und dem zweiten Fahrzeug befinden. Gemäß einer Ausgestaltung des Verfahrens erfolgt das Übertragen von elektrischer Energie vom Energiespeicher des ersten Fahrzeugs an den Energiespeicher des zweiten Fahrzeugs durch das dritte Fahrzeug. Das dritte Fahrzeug überträgt also elektrische Energie vom ersten an das zweite Fahrzeug.

Befindet sich ein drittes Fahrzeug in einem Zwischenraum zwischen dem ersten und dem zweiten Fahrzeug, kann das Verfahren vor dem Schritt des Übertragens von elektrischer Energie vom ersten an das zweite Fahrzeug vorsehen, dass das dritte Fahrzeug derart gesteuert wird, dass es aus dem Zwischenraum zwischen dem ersten und dem zweiten Fahrzeug entfernt wird. Dies kann insbesondere durch Einleiten eines Überholvorgangs des ersten, zweiten und/oder dritten Fahrzeugs durch Übermittlung zumindest eines Befehls an das erste, das zweite und/oder das dritte Fahrzeug erfolgen. Der Befehl kann von einem der anderen Fahrzeuge oder von der Zentrale ausgesandt werden.

Um effizient zu laden, insbesondere mittels einer induktiven Kopplungsvorrichtung, ist ein geringer Abstand zwischen den Fahrzeugen vorteilhaft, insbesondere ein Abstand geringer als der Höchstabstand. Dies erfordert, dass beide Fahrzeuge präzise kontrolliert werden, was vorliegend durch den Austausch von Informationen zwischen den Fahrzeugen ermöglicht wird. Die Informationen können direkt zwischen den Fahrzeugen ausgetauscht werden oder z.B. über die Zentrale. Beispielsweise ist der Höchstabstand geringer als ein üblicher Sicherheitsabstand.

Die Regelung des Abstands durch Steuern des ersten und/oder des zweiten Fahrzeugs kann auf einem Modell des jeweils anderen Fahrzeugs basieren, insbesondere einem Bewegungsmodell. Als Parameter können dabei z.B. Lage, Geschwindigkeit und Beschleunigung des anderen Fahrzeugs eingehen, optional auch Daten des Fahrzeugtyps (Motorleistung, etc.), des Alters des Fahrzeugs und Verschleißdaten, z.B. der Bremsen.

Optional werden die Fahrzeuge so angeordnet, dass das Fahrzeug mit dem höheren Gewicht vorn fährt.

Zumindest eines der beiden Fahrzeuge (insbesondere das vorausfahrende Fahrzeug) übermittelt Informationen über eine beabsichtigte Fahrbewegung und/oder Bewegungsänderung und führt diese Fahrbewegung/Bewegungsänderung mit einer vorgegebenen oder vorgebbaren Verzögerung (z.B. 50 ms) durch. Hierdurch kann eine Reaktionszeit des jeweils anderen Fahrzeugs (z.B. infolge einer Sensorlatenz, Rechenlatenz, Funklatenz und/oder Motorlatenz) ausgeglichen werden, wodurch geringere Abstände ermöglicht werden.

Durch den Mindestabstand berühren sich die Fahrzeuge nicht (optional nur über die Kopplungsvorrichtung, wobei darunter keine Berührung der Fahrzeuge verstanden wird; optional berühren sich auch die Kopplungsvorrichtungen der Fahrzeuge nicht). Hierdurch können Beschädigungen der Fahrzeuge und/oder Komforteinbußen vermieden werden.

In einer Ausgestaltung ist vorgesehen, dass das Übermitteln von Informationen bezüglich jeweils zumindest eines Fahrzustandes beider Fahrzeuge zwischen dem ersten und dem zweiten Fahrzeug erfolgt. Dabei kann insbesondere vorgesehen sein, dass die Regelung des Abstands zwischen den Fahrzeugen durch Steuern sowohl des ersten als auch des zweiten Fahrzeugs basierend auf den übermittelten Informationen erfolgt.

Die übermittelten Informationen bezüglich des Fahrzustandes können Informationen bezüglich eines Ist-Fahrzustands, eines Soll-Fahrzustands und/oder einen erwarteten Fahrzustands sein. Die Informationen umfassen beispielsweise eine Geschwindigkeit, eine Beschleunigung und/oder einen Lenkwinkel. Informationen bezüglich des Ist-Fahrzustands umfassen z.B. einen aktuellen Messwert einer Geschwindigkeit, einer Beschleunigung und/oder eines Lenkwinkels. Informationen bezüglich des Soll-Fahrzustands umfassen z.B. entsprechende Zielwerte einer Regelschleife. Informationen bezüglich des erwarteten Fahrzustands umfassen z.B. einen zukünftigen Ist-Fahrzustand, der anhand der Route des Fahrzeugs und/oder durch Beobachtung der Umgebung des Fahrzeugs als zu einem bestimmten zukünftigen Zeitpunkt wahrscheinlich vorliegend berechnet wird.

Es können sowohl Informationen bezüglich eines Fahrzustandes des ersten Fahrzeugs an das zweite Fahrzeug als auch Informationen bezüglich eines Fahrzustandes des zweiten Fahrzeugs an das erste Fahrzeug übermittelt werden. Hierdurch wird eine besonders präzise Steuerung beider Fahrzeuge zwischen dem Mindest- und dem Höchstabstand möglich. Die Übermittlung der Informationen kann jeweils auch über die Zentrale erfolgen und/oder direkt von Fahrzeug zu Fahrzeug.

Optional erfolgt das Übertragen von elektrischer Energie vom Energiespeicher des ersten Fahrzeugs an den Energiespeicher des zweiten Fahrzeugs über eine Kopplungsvorrichtung, die Energie in Form von Licht, insbesondere mittels eines Laserstrahls überträgt. Hierbei sind besonders große Abstände möglich. Ferner sind keine zwischen den Fahrzeugen angeordneten, mechanisch bewegbaren Bauteile nötig.

In einer Weiterbildung sind um den Laserstrahl herum mehrere Lichtschranken angeordnet. Dabei kann vorgesehen sein, dass der Laserstrahl abgeschaltet wird, wenn eine der Lichtschranken blockiert wird.

Das System kann ferner eine Kopplungsvorrichtung umfassen, die ausgebildet und eingerichtet ist zum Übertragen von elektrischer Energie zwischen dem Energiespeicher des ersten Fahrzeugs und dem Energiespeicher des zweiten Fahrzeugs durch eine elektrische Kopplung (z.B. induktiv oder durch elektrischen Kontakt) eines am ersten Fahrzeug angeordneten ersten Kopplungselements der Kopplungsvorrichtung mit einem am zweiten Fahrzeug angeordneten zweiten Kopplungselement der Kopplungsvorrichtung. Dabei umfasst zumindest eines der beiden Kopplungselemente einen Arm, der bezüglich desjenigen Fahrzeugs, an dem das Kopplungselement angeordnet ist, bewegbar ist. Der Arm ist ausgebildet, einen Abstand zwischen den beiden Fahrzeugen bis zu einem vorgegebenen Höchstabstand zu überbrücken.

Auf diese Weise können die beiden Fahrzeuge einen Abstand zueinander einhalten, der größer ist als der z.B. aus Sicherheitsgründen einzuhaltende Mindestabstand und dennoch effizient Energie übertragen.

Alternativ oder zusätzlich zum bewegbaren Arm kann vorgesehen sein, dass die Kopplungsvorrichtung dazu ausgebildet ist, elektrische Energie vom Energiespeicher des ersten Fahrzeugs an den Energiespeicher des zweiten Fahrzeugs durch Aussenden von Licht zu übertragen, insbesondere mittels eines Laserstrahls. Hierzu umfasst das erste Fahrzeug einen Laser, insbesondere einen Hochleistungslaser, das zweite Fahrzeug eine photovoltaische Zelle. In einer Weiterbildung sind um den Laserstrahl herum mehrere Lichtschranken angeordnet. Dabei kann vorgesehen sein, dass der Laserstrahl abgeschaltet wird, wenn eine der Lichtschranken blockiert wird. Optional sind die Lichtschranken kodiert, z.B. durch die Wellenlänge und/oder indem die Strahlen der Lichtschranken unterschiedlich gepulst werden. Es kann vorgesehen sein, dass der Hochleistungslaser abgeschaltet wird, wenn zumindest eine der kodierten Lichtstrahlen nicht auf den jeweils zugeordneten Empfänger trifft. So kann verhindert werden, dass der Hochleistungslaser an einer anderen Stelle auftrifft, als auf die photovoltaische Zelle, z.B. bei Relativbewegungen der Fahrzeuge.

Ferner können über die Strahlen der Lichtschranken Informationen übertragen werden, z.B. über einen Fahrzustand.

Die beiden Kopplungselemente können magnetisch und/oder mechanisch miteinander verriegelbar sein. Hierdurch kann eine ungewollte Trennung der Kopplungselemente verhindert werden.

Optional umfasst die Kopplungsvorrichtung einen Antrieb, der dazu ausgebildet ist, den Arm relativ zu dem Fahrzeug, an dem die Kopplungsvorrichtung montiert ist, zu bewegen. Zum Beispiel kann vorgesehen sein, dass der Antrieb den Arm in Abhängigkeit von einem Abstand zwischen den beiden Fahrzeugen und/oder von auf den Arm einwirkenden Kräften und/oder Beschleunigungen bewegt wird.

Der Arm kann ein flexibler Arm sein und/oder zumindest einen pneumatischen Muskel umfassen. Ein pneumatischer Muskel ist z.B. aufpumpbar. Ein aufgepumpter pneumatischer Muskel ist kürzer und/oder weniger flexibel als ein nicht aufgepumpter pneumatischer Muskel.

Optional umfassen beide Fahrzeuge einen ausfahrbaren Arm, insbesondere einen ausfahrbaren Arm mit pneumatischen Muskeln. Alternativ oder zusätzlich kann der ausfahrbare Arm ein Bimetall umfassen.

Die Kopplungsvorrichtung kann zumindest einen Sensor umfassen, der zur Messung von auf den Arm einwirkenden Kräften und/oder von auf das Fahrzeug, an dem der Arm vorgesehen ist, oder auf den Arm einwirkenden Beschleunigungen ausgebildet und eingerichtet ist. Die Kopplungsvorrichtung kann ferner einen Antrieb zum Bewegen des Arms umfassen. Die Kopplungsvorrichtung kann ausgebildet sein, den Antrieb in Abhängigkeit von zumindest einem von dem Sensor bereitgestellten Wert zu steuern.

Das System kann ferner eine Kopplungsvorrichtung umfassen, die ausgebildet und eingerichtet ist zum Übertragen von elektrischer Energie zwischen dem Energiespeicher des ersten Fahrzeugs und dem Energiespeicher des zweiten Fahrzeugs durch eine induktive elektrische Kopplung eines am ersten Fahrzeug festgelegten ersten Kopplungselements der Kopplungsvorrichtung mit einem am zweiten Fahrzeug festgelegten zweiten Kopplungselement der Kopplungsvorrichtung. Dabei umfasst das erste oder das zweite Kopplungselement mehrere Induktionsspulen, die entlang eines konkav oder konvex ausgebildeten Abschnitts einer Fahrzeugfront oder eines Fahrzeughecks des ersten oder zweiten Fahrzeugs angeordnet sind. Alternativ umfasst sowohl das erste als auch das zweite Kopplungselement jeweils mehrere Induktionsspulen, die entlang eines konkav oder konvex ausgebildeten Abschnitts einer Fahrzeugfront oder eines Fahrzeughecks des ersten und des zweiten Fahrzeugs angeordnet sind.

Somit kann eine effiziente induktive Energieübertragung bei mehreren verschiedenen Winkellagen der hintereinander fahrenden Fahrzeuge zueinander ermöglicht werden. Dabei wird insbesondere zumindest eine der mehreren Induktionsspulen, die zumindest einer Induktionsspule des jeweils anderen Kopplungselements nächstgelegen ist, verwendet.

Beispielsweise umfasst das erste Kopplungselement mehrere Induktionsspulen, die entlang eines konkav ausgebildeten Abschnitts des Fahrzeughecks des ersten Fahrzeugs angeordnet sind, und das zweite Kopplungselement umfasst mehrere Induktionsspulen, die entlang eines konvex ausgebildeten Abschnitts der Fahrzeugfront des zweiten Fahrzeugs angeordnet sind. Hierdurch ist eine besonders effiziente Energieübertragung bei verschiedenen Winkellagen der Fahrzeuge möglich, z.B. bei Kurvenfahrten der Fahrzeuge.

Gemäß einem Aspekt der Erfindung wird eine Kopplungsvorrichtung nach einer beliebigen hierin beschriebenen Ausgestaltung bereitgestellt.

Das System kann Mittel zur Ausführung der Schritte eines beliebigen, hierin beschriebenen Verfahrens umfassen.

Das Fahrzeug kann ausgebildet und eingerichtet sein zur Verwendung in einem beliebigen, hierin beschriebenen Verfahren oder in einem beliebigen, hierin beschriebenen System.

Die Erfindung wird nachfolgend unter Bezugnahme auf die Figuren anhand von Ausführungsbeispielen näher erläutert werden. Es zeigen:
- Fig. 1: ein System zum Austausch elektrischer Energie zwischen zwei sich bewegenden, elektrisch angetriebenen Fahrzeugen;
- Fig. 2: zwei elektrisch angetriebene Fahrzeuge zur Verwendung im System gemäß Fig. 1, die mit einem Ausführungsbeispiel einer induktiven Kopplungsvorrichtung elektrisch miteinander gekoppelt sind;
- Fig. 3: drei elektrisch angetriebene Fahrzeuge zur Verwendung im System gemäß Fig. 1, die mit mehreren induktiven Kopplungsvorrichtungen elektrisch miteinander gekoppelt sind;
- Fig. 4A und 4B: zwei elektrisch angetriebene Fahrzeuge zur Verwendung im System gemäß Fig. 1, die mit einem Ausführungsbeispiel einer induktiven Kopplungsvorrichtung elektrisch miteinander gekoppelt sind;
- Fig. 5A und 5B: zwei elektrisch angetriebene Fahrzeuge zur Verwendung im System gemäß Fig. 1, die mit einem Ausführungsbeispiel einer elektrisch kontaktierenden Kopplungsvorrichtung elektrisch miteinander gekoppelt sind;
- Fig. 6A und 6B: die Kopplungsvorrichtung gemäß Fig. 5A und 5B;
- Fig. 7A und 7B: zwei elektrisch angetriebene Fahrzeuge zur Verwendung im System gemäß Fig. 1, die mit einem Ausführungsbeispiel einer induktiven Kopplungsvorrichtung elektrisch miteinander gekoppelt sind;
- Fig. 8: ein Flussdiagramm eines Verfahrens zum Austausch elektrischer Energie zwischen zwei sich bewegenden, elektrisch angetriebenen Fahrzeugen;
- Fig. 9A bis 9C: ein Kopplungselement mit einem ausfahrbaren Arm mit pneumatischen Muskeln;
- Fig. 10A und 10B: zwei mit einer Kopplungsvorrichtung zum Übertragen von Energie gekoppelte, elektrisch angetriebene Fahrzeuge zur Verwendung im System gemäß Fig. 1 und im Verfahren gemäß Fig. 8, wobei die Kopplungsvorrichtung den Arm gemäß Fig. 9A bis 9C umfasst;
- Fig. 11: einen Querschnitt durch den Arm gemäß Fig. 9A bis 10B;
- Fig. 12: zwei elektrisch angetriebene Fahrzeuge zur Verwendung im System gemäß Fig. 1 und im Verfahren gemäß Fig. 8, die mit einem Ausführungsbeispiel einer Kopplungsvorrichtung miteinander gekoppelt sind, die zur Phtoübertragung von Energie ausgebildet ist; und
- Fig. 13: eine Anordnung von Laserstrahlen der Kopplungsvorrichtung gemäß Fig. 12.

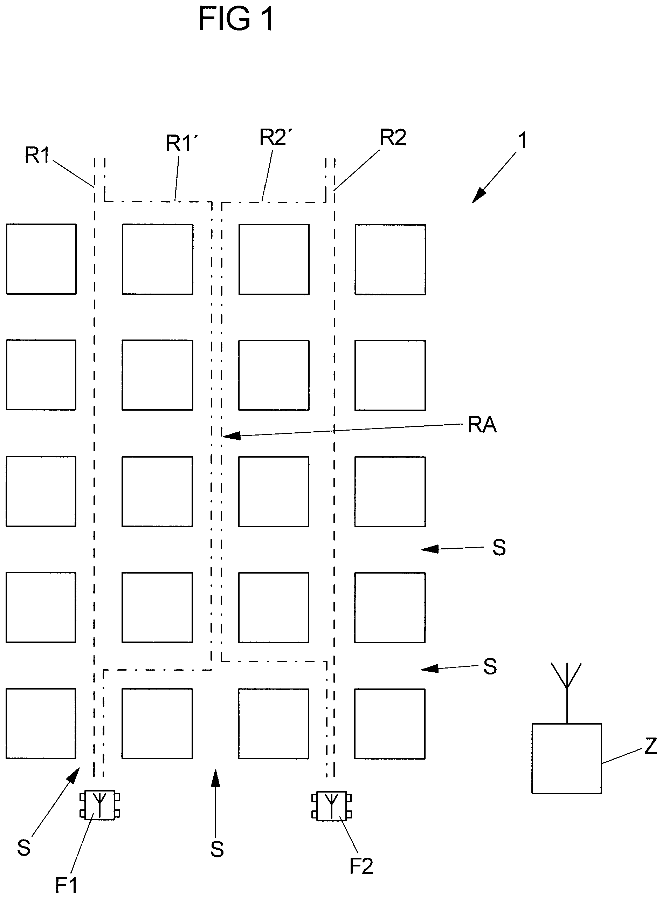

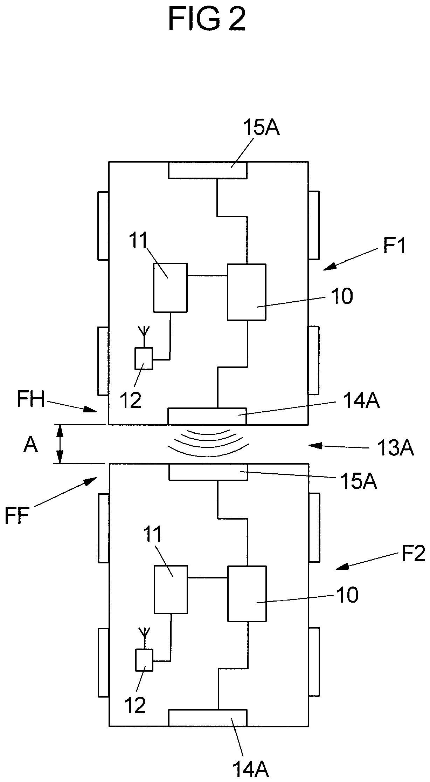

Fig. 1 zeigt ein System 1, in welchem ein elektrisch angetriebenes Fahrzeug während der Fahrt mit Energie versorgt werden kann, um dessen Reichweite zu erhöhen. Das System 1 umfasst mehrere elektrisch angetriebene Fahrzeuge, häufig auch als Elektrofahrzeuge bezeichnet, darunter ein erstes Fahrzeug F1 und ein zweites Fahrzeug F2. Die Fahrzeuge F1, F2 umfassen jeweils zumindest einen elektrischer Energiespeicher 10, wie z.B. anhand Fig. 2 ersichtlich, der mit elektrischem Strom versorgt werden und elektrische Energie speichern kann. Der Energiespeicher ist bevorzugt ein Akkumulator. Im Energiespeicher gespeicherte elektrische Energie kann abgegeben werden, z.B. an einen Elektromotor des jeweiligen Fahrzeugs F1, F2, der mit Rädern des Fahrzeugs gekoppelt ist, um das Fahrzeug elektrisch anzutreiben. Beide Fahrzeuge F1, F2 sind im vorliegenden Beispiel Personenkraftwagen.

Ferner umfasst das System 1 eine Zentrale Z. Die Zentrale Z umfasst eine Kommunikationseinheit und eine Datenverarbeitungseinheit, insbesondere einen Computer. Die Kommunikationseinheit der Zentrale ist zur drahtlosen Datenkommunikation ausgebildet oder mit einer Einrichtung zur drahtlosen Datenkommunikation wirkverbunden. Beispielsweise umfasst die Kommunikationseinheit der Zentrale ein Mobilfunkmodul oder eine Mobilfunkbasisstation.

Die Fahrzeuge F1, F2 des Systems 1 sind autonom fahrende Fahrzeuge. Sie können somit entlang einer Route fahren, ohne dass ein menschlicher Fahrer das Fahrzeug F1, F2 steuern muss. Hierzu umfassen die Fahrzeuge F1, F2 jeweils eine Steuereinheit 11, welche die Steuerung übernimmt (siehe Fig. 2). Die zu fahrende Route kann z.B. ein Fahrgast an die Steuereinheit 11 eingeben oder die Steuereinheit 11 empfängt eine vorgegebene Route über eine Kommunikationseinheit 12 des jeweiligen Fahrzeugs F1, F2. Die Kommunikationseinheit 12 ist zur drahtlosen Datenkommunikation ausgebildet, z.B. umfasst die Kommunikationseinheit ein Mobilfunkmodul. Die Kommunikationseinheiten 12 der Fahrzeuge F1, F2 können miteinander und/oder mit der Kommunikationseinheit der Zentrale Z kommunizieren, insbesondere auf diese Weise Informationen austauschen. Die Zentrale Z kann vorgegebene Routen an die Fahrzeuge F1, F2 kommunizieren. Ferner können die Fahrzeuge F1, F2 einen oder mehrere geeignete Umgebungssensoren und/oder eine oder mehrere Kameras umfassen, die Informationen an die Steuereinheit 11 bereitstellen. Die Steuereinheit 11 steuert das Fahrzeug F1, F2 entlang der vorgegebenen Route, wobei sie die Informationen der Umgebungssensoren und/oder Kameras verwendet, um sicher durch den Verkehr zu navigieren.

Vorliegend bewegt sich das erste Fahrzeug F1 entlang einer vorgegebenen ersten Route R1 und das zweite Fahrzeug bewegt sich entlang einer vorgegebenen zweiten Route R2. Beide Routen R1, R2 erstrecken sich jeweils von einem Startpunkt bis zu einem Zielpunkt. Die Routen verlaufen auf Straßen S oder anderen von den Fahrzeugen F1, F2 befahrbaren Wegen. Im Beispiel gemäß Fig. 1 verlaufen die Routen R1, R2 über schematisch dargestellte Straßen einer Stadt. Die erste und die zweite Route R1, R2 sind vorliegend voneinander verschieden und weisen keinen überlappenden Routenabschnitt auf.

Um die erste Route R1 bis zum Zielpunkt zu befahren, benötigen die Fahrzeuge F1, F2 eine bestimmte Energiemenge. Der genaue Wert der Energiemenge hängt von mehreren Parametern ab, etwa dem Routenverlauf, dem tatsächlichen Verkehrsaufkommen, den Witterungsbedingungen und Ähnlichem. Für diese Parameter sind Schätzwerte verfügbar, welche anhand von in den Fahrzeugen F1, F2 und/oder der Zentrale Z gespeicherten Kartendaten und/oder von den Fahrzeugen F1, F2 des Systems 1 oder z.B. anderen Fahrzeugen bereitgestellten Daten berechnet werden können. Diese Berechnung können die Fahrzeuge F1, F2 des Systems 1 oder die Zentrale Z durchführen. Anhand der geschätzten benötigten Energiemenge wird ein Schwellenwert eines Ladestands des Energiespeichers 10 jedes Fahrzeugs F1, F2 bestimmt. Ist der tatsächliche Ladestand größer als der Schwellenwert, so hat das Fahrzeug F1, F2 einen Überschuss an gespeicherter Energie und kann Energie abgeben. Ist der tatsächliche Ladestand geringer als der Schwellenwert (oder ein weiterer Schwellenwert), hat das Fahrzeug F1, F2 einen Bedarf an gespeicherter Energie und muss bis zu seinem Zielpunkt Energie aufnehmen.

Vorliegend hat das erste Elektrofahrzeug F1 einen Überschuss an gespeicherter Energie und das zweite Fahrzeug F2 weist einen Energiebedarf auf. Für gewöhnlich müsste das zweite Fahrzeug F2 auf seiner zweiten Route R2 einen Zwischenstopp an einer Ladestation einlegen oder sogar seine Route so ändern, dass ein solcher Zwischenstopp möglich ist. Dies verschwendet Zeit und gegebenenfalls auch Energie. Womöglich ist die nächste Ladestation sogar so weit entfernt, dass es mit der verbleibenden Energie und der damit verbundenen Reichweite nicht möglich ist, diese anzufahren, sodass das Fahrzeug möglicherweise sogar abgeschleppt werden müsste.

Mit dem System 1 gemäß Fig. 1 können solche Nachteile vermieden werden, indem die Reichweite des zweiten Fahrzeugs F2 durch Aufladen dessen Energiespeichers 10 durch ein anderes Fahrzeug, hier das erste Fahrzeug F1 erhöht wird.

Die Fahrzeuge F1, F2 kommunizieren ihre Ladestände an die Zentrale Z. Die Zentrale Z berechnet ferner die Schwellenwerte oder erhält diese ebenfalls von den Fahrzeugen F1, F2. Alternativ oder zusätzlich kommunizieren die Fahrzeuge F1, F2 einen Energiebedarf und/oder einen Energieüberschuss an die Zentrale Z. Die Zentrale Z berechnet eine geänderte erste Route R1' und eine geänderte zweite Route R2', die vorzugsweise jeweils dieselben Start- und Zielpunkte aufweisen wie die erste bzw. die zweite Route R1, R2. Die geänderten Routen R1', R2' weisen einen übereinstimmenden Routenabschnitt RA auf. Am übereinstimmenden Routenabschnitt RA erstrecken sich die geänderten Routen R1', R2' über dieselbe(n) Straße(n). Die geänderten Routen R1', R2' umfassen räumliche Informationen und auch zeitliche Informationen. Die zeitlichen Informationen geben vor, zu welchem Zeitpunkt ein bestimmter Punkt auf der geänderten Route R1', R2' zu passieren ist.

Das System 1 kann eine Vielzahl von Fahrzeugen umfassen und daraus ein Paar aus einem ersten und einem zweiten Fahrzeug auswählen, deren Routen besonders gut aneinander anpassbar sind.

Die geänderten Routen R1', R2' werden von der Zentrale Z an die Fahrzeuge F1, F2 übermittelt. Die Fahrzeuge F1, F2 steuern entlang der geänderten Routen R1', R2'. Am übereinstimmenden Routenabschnitt RA bewegen sie sich benachbart zueinander. Die Änderung der Routen kann so erfolgen, dass beide Fahrzeuge F1, F2 einen möglichst langen (gemeinsamen) übereinstimmenden Routenabschnitt RA teilen. Beide Fahrzeuge F1, F2 reihen sich im optimalen Fall so in den fließenden Verkehr ein, dass sie schon zum Beginn dieses übereinstimmenden Routenabschnitts RA hintereinander fahren.

Wie insbesondere anhand Fig. 2 ersichtlich, umfasst das System 1 eine Kopplungsvorrichtung 13A zur Übertragung elektrischer Energie zwischen den Fahrzeugen F1, F2. Die Kopplungsvorrichtung 13A gemäß Fig. 2 ist als induktive Kopplungsvorrichtung ausgebildet. Die Kopplungsvorrichtung 13A umfasst ein erstes Kopplungselement 14A, welches am Fahrzeugheck FH jedes der Fahrzeuge F1, F2 angeordnet ist, und ein zweites Kopplungselement 15A, welches an der Fahrzeugfront FF jedes der Fahrzeuge F1, F2 angeordnet ist. Befinden sich ein erstes Kopplungselement 14A und ein zweites Kopplungselement 15A in einem Abstand A zueinander geringer als ein vorgegebener Höchstabstand (z.B. 2 Meter, 1 Meter, 50 cm oder 20 cm), so können sie induktiv Energie austauschen. Hierzu umfasst jedes der Kopplungselemente 14A, 15A zumindest eine Induktionsspule.

Die Induktionsspule des ersten Kopplungselements 14A erzeugt ein magnetisches Wechselfeld. Dieses magnetische Wechselfeld erzeugt durch das Prinzip der Gegeninduktion in der Induktionsspule des zweiten Kopplungselements 15A einen Wechselstrom, der (insbesondere unter Verwendung eines Gleichrichters) zum Laden des Energiespeichers 10 des zweiten Fahrzeug F2 verwendet wird. Die Kopplungsvorrichtung 13A kann eine resonant-induktive Kopplung bereitstellen. Die resonant-induktive Kopplung vergrößert einen möglichen Abstand der beiden Induktionsspulen auf 1 bis 2 m.

Gemäß Fig. 2 befinden sich die Fahrzeuge F1, F2 auf dem übereinstimmenden Routenabschnitt RA im Abstand A kleiner als dem vorgegebenen Höchstabstand hintereinander. Der Energiespeicher 10 des ersten Fahrzeugs F1 gibt über die Kopplungsvorrichtung 13A elektrische Energie an den Energiespeicher 10 des zweiten Fahrzeugs F2 ab. Hierdurch wird der Ladestand des Energiespeichers 10 des zweiten Fahrzeugs F2 erhöht. Die Energieübertragung kann im Stehen (z.B. im Stau oder an einer Ampel) und/oder im Fahren erfolgen.

Somit wird das zweite Fahrzeug F2 während der Fahrt geladen und dessen Reichweite wird erhöht. Insbesondere falls das erste Fahrzeug F1 nicht genügend Energie abgeben kann, ist es möglich, den Vorgang mit einem weiteren Fahrzeug des Systems 1 mit Energieüberschuss zu wiederholen.

Anstatt beide Routen R1, R2 zu ändern, ist es auch möglich, nur eine der beiden Routen zu ändern, z.B. wenn eines der Fahrzeuge aufgrund des Ladestands und/oder aufgrund von zeitlichen Vorgaben nicht bereit ist, seine Route zu ändern.

In einer alternativen Ausgestaltung können auch eines oder mehrere der Fahrzeuge F1, F2 die Aufgaben der Zentrale Z übernehmen.

Falls die geänderten Routen R1', R2' nicht ausreichend genau sind oder es z.B. das Verkehrsaufkommen es nicht erlaubt, kann es dazu kommen, dass beide Fahrzeuge F1, F2 zwar nah beieinander, aber nicht hintereinander auf den übereinstimmenden Routenabschnitt RA gelangen. In solchen Fällen sind die nachfolgenden Verfahrensschritte möglich, um die gewünschte relative Lage der Fahrzeuge F1, F2 zueinander zu erreichen.

Beispielsweise fährt das erste Fahrzeug F1 vor dem zweiten Fahrzeug F2 und zwischen den Fahrzeugen F1, F2 befinden sich ein oder mehrere weitere Verkehrsteilnehmer. Im Falle einer mehrspurigen Fahrbahn am übereinstimmenden Routenabschnitt RA könnte das erste Fahrzeug F1 etwas langsamer und das Zweite Fahrzeug F2 etwas schneller fahren, so dass zwischen den Fahrzeugen F1, F2 befindliche Fahrzeuge entweder das erste Fahrzeug F1 überholen oder selbst von dem zweiten Fahrzeug F2 überholt werden. Es wird also ein Überholvorgang eingeleitet oder provoziert. Bei einer einspurigen Fahrbahn ist es möglich abzuwarten, bis das oder die zwischen dem ersten und dem zweiten Fahrzeug F1, F2 befindlichen Verkehrsteilnehmer von dem übereinstimmenden Routenabschnitt RA ausschert, oder bis sich die Fahrbahn erweitert. Die Einleitung des Überholvorgangs und/oder das Abwarten des Ausscherens kann durch Kommunikation zwischen den Fahrzeugen F1, F2 und/oder den dazwischen befindlichen Verkehrsteilnehmern und/oder durch Kommunikation mit der Zentrale Z ermittelt und ausgelöst werden. Bei dem dazwischen befindlichen Verkehrsteilnehmer kann es sich um ein drittes Fahrzeug F3 des Systems 1 handeln, dass mit dem ersten und dem zweiten Fahrzeug F1, F2 und/oder der Zentrale Z kommunizieren kann.

Wenn die Fahrbahn beispielsweise über einen Großteil des übereinstimmenden Routenabschnitts einspurig bleibt und auch der/die zwischen den Fahrzeugen F1, F2 befindliche(n) Verkehrsteilnehmer nicht plant oder bereit ist, von der Strecke abzuweichen, können verschiedene Verfahrensschritte durchgeführt werden. Das erste Fahrzeug F1 kann angewiesen werden, für eine Mikrowartezeit (z.B. kürzer als 30 s) in einer ausgewiesenen Haltebucht (z.B. ein Parkplatz, eine Einfahrt etc.) anzuhalten. Dies könnte die Lösung der Wahl sein, wenn sich zwischen dem ersten und dem zweiten Fahrzeug F1, F2 viele weitere Fahrzeuge befinden.

Ferner kann durch Kommunikation mit den zwischen dem ersten und dem zweiten Fahrzeug F1, F2 befindlichen Fahrzeugen (z.B. gegen Mikrobezahlung) ein Überholvorgang dieser Fahrzeuge erkauft oder angefordert werden. Ein dazwischen befindliches Fahrzeug stellt dann zwischen sich und dem ersten Fahrzeug F1 eine Lücke bereit, in die das zweite Fahrzeug F2 überholen kann.

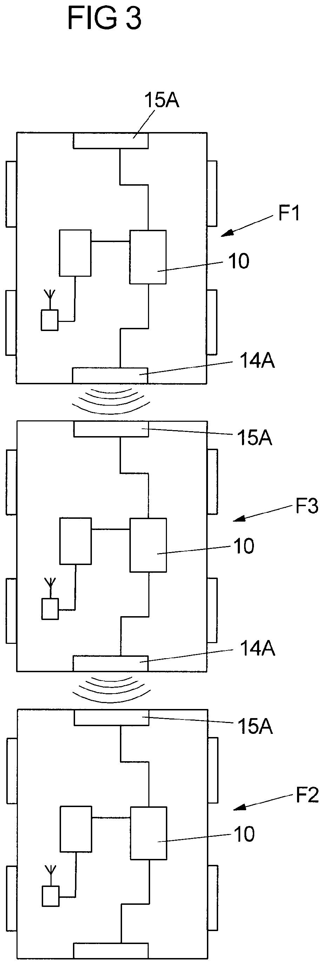

Wie in Fig. 3 gezeigt, ist es ferner möglich, dass ein zwischen dem ersten und dem zweiten Fahrzeug F1, F2 befindliches drittes Fahrzeug F3 des Systems 1 elektrische Energie vom ersten Fahrzeug F1 an das zweite Fahrzeug F2 überträgt. Das dritte Fahrzeug F3 umfasst ein erstes und ein zweites Kopplungselement 14A, 15A mit denen es Energie vom ersten Fahrzeug F1 empfangen und an das zweite Fahrzeug F2 abgeben kann. Das dritte Fahrzeug F3 dient als passiver Übertragungspartner. Diese Funktionalität ist auf eine größere Anzahl von Fahrzeugen übertragbar, die einen Fahrzeugzug bilden, bei dem ein oder mehrere Fahrzeuge von einem oder mehreren anderen Fahrzeugen mit Energie versorgt werden.

Optional kann eines der mehreren durch die Kopplungsvorrichtungen 13A elektrisch gekoppelten Fahrzeuge F1, F2, F3, hier das erste Fahrzeug F1, mehrere der anderen Fahrzeuge F2, F3 mit elektrischer Energie versorgen.

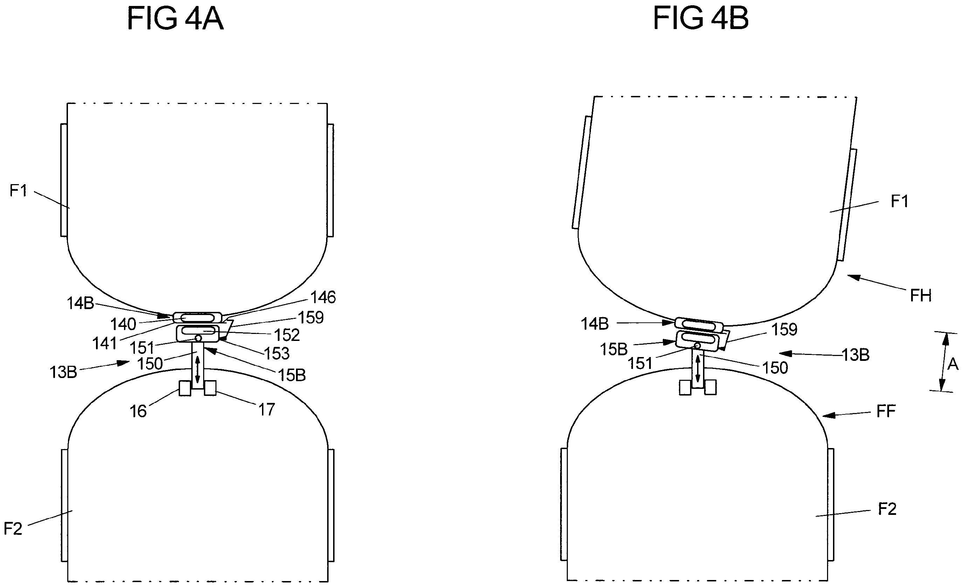

Alternativ zu einer induktiven Kopplung der Fahrzeuge F1-F3 ist auch eine Kopplung mittels direktem elektrischen Kontakt (also durch galvanische Verbindung von elektrischen Leitern) zwischen den Fahrzeugen F1-F3 möglich, wie nachfolgend im Zusammenhang mit Fig. 4A bis Fig. 6B erläutert.

Fig. 4A und 4B zeigen ein erstes Fahrzeug F1 und ein zweites Fahrzeug F2 für das System 1 gemäß Fig. 1, die sich von den Fahrzeugen F1, F2 gemäß Fig. 2 nur durch ihre Kopplungsvorrichtung 13B unterscheiden. Die Kopplungsvorrichtung 13B weist ein erstes Kopplungselement 14B auf, welches am ersten Fahrzeug F1 montiert ist, und zwar im Beispiel gemäß Fig. 4A und 4B am Fahrzeugheck FH. Die Kopplungsvorrichtung 13B umfasst auch ein zweites Kopplungselement 15B, welches am zweiten Fahrzeug F2 montiert ist, im gezeigten Beispiel an der Fahrzeugfront FF. Beide Kopplungselemente 14B, 15B umfassen jeweils eine Induktionsspule 140, 152. Die Induktionsspulen 140, 152 sind zur Übertragung elektrischer Energie miteinander induktiv koppelbar. Besonders effizient ist die Kopplung bei einem möglichst geringen Abstand.

Das erste Kopplungselement 14B umfasst einen Spulenträger 141, an dem die Induktionsspule 140 befestigt ist. Der Spulenträger 141 ist am Fahrzeugheck FH des ersten Fahrzeugs F1 befestigt, z.B. an oder in der Stoßstange. Beispielsweise ist der Spulenträger 141 in Form eines Blocks oder Pads aus Gummi oder dergleichen hergestellt.

Das zweite Kopplungselement 15B umfasst einen Arm 150. Der Arm 150 ist relativ zum zweiten Fahrzeug F2 bewegbar. Vorliegend ist der Arm 150 entlang der Fahrzeuglängsachse (welche sich vom Fahrzeugheck FH zur Fahrzeugfront FF erstreckt) längsverschiebbar gelagert. Der Arm 150 lässt sich also in Fahrtrichtung (in Bezug auf eine Geradeausfahrt) ein- und ausfahren. Auf diese Weise kann der Arm 150 einen während der Fahrt der Fahrzeuge F1, F2 veränderlichen Abstand A zwischen den Fahrzeugen F1, F2 ausgleichen und überbrücken, um einen möglichst geringen Abstand der Induktionsspulen 140, 152 zu ermöglichen. Am dem zweiten Fahrzeug F2 abgewandten Ende des Arms 150 ist ein Spulenträger 153 angeordnet. Am Spulenträger 153 ist die Induktionsspule 152 des zweiten Kopplungselements 15B befestigt. Der Spulenträger 153 ist um ein Gelenk 151 schwenkbar am Arm 150 gelagert. Befindet sich das zweite Fahrzeug F2 auf einer ebenen Straße, verläuft die Schwenkachse des Gelenks 151 im Wesentlichen senkrecht zur Straße. Durch die Schwenkbarkeit können die beiden Induktionsspulen 140, 152 auch in einer Kurvenfahrt (siehe Fig. 4B) immer aufeinander ausgerichtet werden, um eine möglichst hohe Effizienz der Kopplung zu erreichen.

Mittels des Arms 150 kann ein physischer Kontakt zwischen den beiden Kopplungselementen 14B, 15B hergestellt werden, so dass die Induktionsspulen 140, 152 für eine effiziente Energieübertragung z.B. nur wenige Millimeter voneinander entfernt sind.

Der Arm 150 ermöglicht es ferner, Stöße durch Komponenten wie Stoßdämpfer oder nachgiebige Gelenke ohne Messung der Distanz und nachfolgende Regelung abzufangen (auch als "passive Compliance" bezeichnet).

Die Kopplungsvorrichtung 13B umfasst zudem einen Sensor 16, z.B. in Form eines Kraft-, Beschleunigungs- oder Abstandssensors, der ausgebildet ist, eine Kraft und/oder eine Beschleunigung zu messen, die auf den Arm 150 einwirkt, oder den Abstand A zwischen den Fahrzeugen F1, F2 zu messen.

Die Kopplungsvorrichtung 13B umfasst auch einen Antrieb 17, um den Arm 150 bezüglich des zweiten Fahrzeugs F2 zu bewegen und/oder um den Spulenträger 153 um das Gelenk 151 zu schwenken. In Abhängigkeit des Abstands A und/oder der relativen Winkellage der Fahrzeuge F1, F2 zueinander kann der Arm 150 und/oder der Spulenträger 153 mittels des Antriebs 17 bewegt werden, um die Induktionsspule 152 des zweiten Kopplungselements 15B aktiv auf die Induktionsspule 140 des ersten Kopplungselements 14B hin auszurichten (auch als "aktive Compliance" bezeichnet). Der Antrieb 17 kann in Abhängigkeit von Messwerten des Sensors 16 gesteuert werden.

Die Kopplungsvorrichtung 13B umfasst ferner eine Verriegelung, um die beiden Spulenträger 141, 153 mechanisch miteinander zu verriegeln, z.B. form- und/oder kraftschlüssig. Die Verriegelung kann in Abhängigkeit von Messwerten des Sensors 16 gesteuert werden, z.B. bei Überschreiten einer vorgegebenen Kraft geöffnet, also entriegelt werden. Vorliegend umfasst die Verriegelung einen Haken 159 am zweiten Kopplungselement 15B, der zum Schließen der Verriegelung in ein Widerlager 146 am ersten Kopplungselement 14B eingreift.

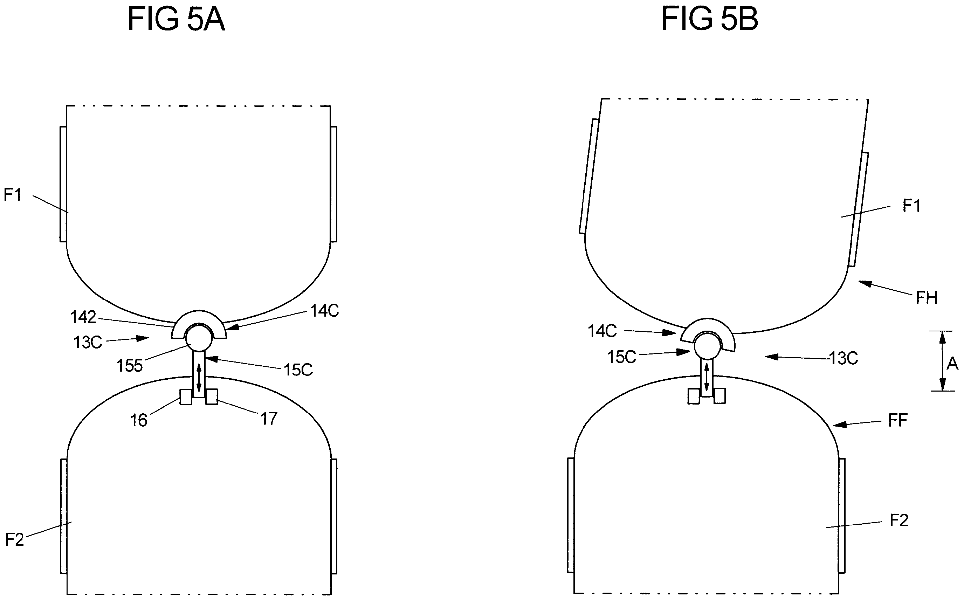

Fig. 5A und 5B zeigen ein erstes Fahrzeug F1 und ein zweites Fahrzeug F2 für das System 1 gemäß Fig. 1, die sich von den Fahrzeugen F1, F2 gemäß Fig. 2 nur durch ihre Kopplungsvorrichtung 13C unterscheiden. Die Kopplungsvorrichtung 13C ermöglicht eine Kopplung durch direkten elektrischen Kontakt. Die Kopplungsvorrichtung 13C umfasst ein erstes Kopplungselement 14C, welches am ersten Fahrzeug F1 montiert ist, und zwar im Beispiel gemäß Fig. 5A und 5B am Fahrzeugheck FH. Die Kopplungsvorrichtung 13C umfasst auch ein zweites Kopplungselement 15C, welches am zweiten Fahrzeug F2 montiert ist, im gezeigten Beispiel an der Fahrzeugfront FF. Beide Kopplungselemente 14C, 15C umfassen jeweils einen elektrischen Kontakt. Zur Übertragung elektrischer Energie werden die elektrischen Kontakte der Kopplungselemente 14C, 15C miteinander in Berührung gebracht. Ein solcher direkter elektrischer Kontakt kann einen sehr geringen Verlust beim Übertragen von elektrischer Energie aufweisen.

Für eine passive oder aktive Compliance umfasst die Kopplungsvorrichtung 13C einen bewegbaren Arm 150, einen Sensor 16 und einen Antrieb 17 und ist wie in der Kopplungsvorrichtung 13B gemäß Fig. 4A und 4B längsverschiebbar.

Zur elektrischen Kontaktierung umfasst das erste Kopplungselement 14C eine Kupplungspfanne 142 (oder allgemein eine Buchse) und das zweite Kopplungselement 15C eine Kupplungskugel 155 (oder allgemein einen Stecker). Die Kupplungskugel 155 ist mittels dem bewegbaren Arm 150 mit der Kupplungspfanne 142 kontaktierend in Eingriff bringbar.

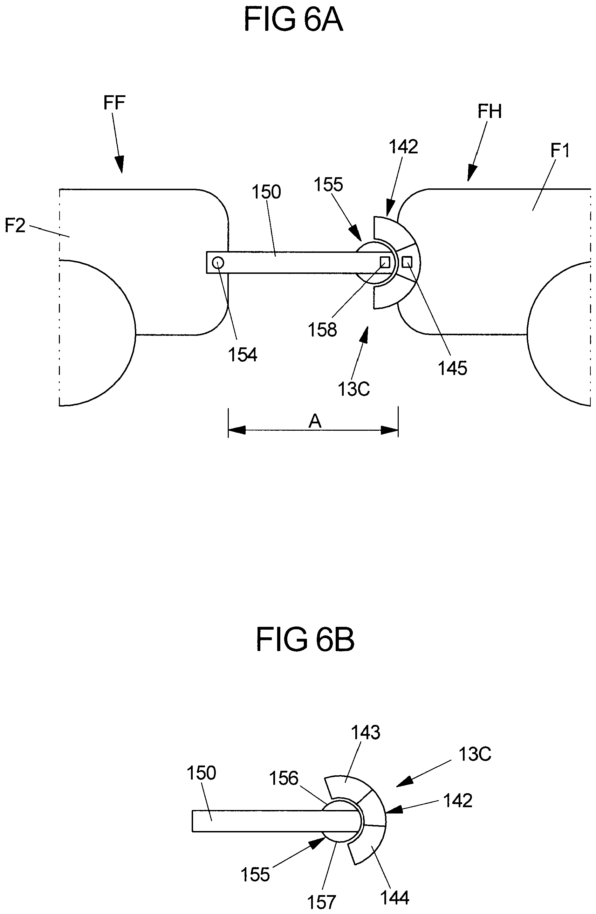

Stehen die Kupplungskugel 155 und die Kupplungspfanne 142 miteinander in Eingriff, umschließt die Kupplungspfanne 142 die Kupplungskugel 155 teilweise. Die Kupplungskugel ist mitsamt dem Arm 150 in der Kupplungspfanne 142 über einen gewissen Winkelbereich schwenkbar. Dies erlaubt einen Spielraum relativer Orientierungen der Fahrzeuge F1, F2 zueinander, zum Beispiel in Kurven oder auf Hügeln. Die elektrischen Kontakte 143, 144 der Kupplungspfanne 142 und die elektrischen Kontakte 156, 157 der Kupplungskugel 155 erstrecken sich im Querschnitt über einen bestimmten Winkelbereich (z.B. mehr als 10, mehr als 20 oder mehr als 40 Grad) der Kupplungspfanne 142 bzw. der Kupplungskugel 155, wie insbesondere anhand Fig. 6A und 6B ersichtlich, und sind insbesondere jeweils durch einen Isolator räumlich voneinander getrennt, der einen etwas größeren Winkelbereich überspannt. Somit kann bei einer Schwenkung innerhalb des Winkelbereichs der elektrische Kontakt aufrecht erhalten werden.

Wird der Arm 150 mit passiver Compliance betrieben, kann er aus dem zweiten Fahrzeug F2 ausgefahren werden und dann durch die Fahrzeugbewegungen in die Buchse eingeführt und in dieser gehalten werden. Der Arm 150 kann passiv eine Variation des Abstands A zwischen den Fahrzeugen F1, F2 kompensieren, insbesondere ein Annähern oder eine Scherung der Fahrzeuge F1, F2 abdämpfen. Ein Federmechanismus kann dafür sorgen, dass der Kontakt zum ersten Fahrzeug F1 aufrechterhalten wird, auch wenn sich der Abstand A vergrößert.

Wird der Arm 150 mit aktiver Compliance ausgestattet und betrieben, kann er sich darüber hinaus, ohne eine Anpassung der Fahrzeugposition, selbstständig in die Buchse bewegen und bei Bedarf Änderungen der relativen Lage der Fahrzeuge F1, F2 zueinander mitverfolgen.

Die Kopplungsvorrichtung 13C umfasst ferner eine magnetische Verriegelung (alternativ oder zusätzlich könnte sie auch eine mechanische Verriegelung wie die Kopplungsvorrichtung 13B gemäß Fig. 4A, 4B aufweisen). Hierzu ist an der Kupplungskugel 155 und/oder an der Kupplungspfanne 142 ein Elektromagnet 158, 145 angeordnet, durch dessen Aktivierung die Kopplungselemente 14C, 15C magnetisch miteinander verriegelt sind.

Um eine robuste Energieübertragung auch bei relativen Bewegungen oder Erschütterungen zu gewährleisten, kann die Kupplungspfanne 142 ein Array aus Kohlebürsten umfassen. Diese werden z.B. durch Federn gegen die Kupplungskugel 155 gepresst und halten damit stets den elektrischen Kontakt.

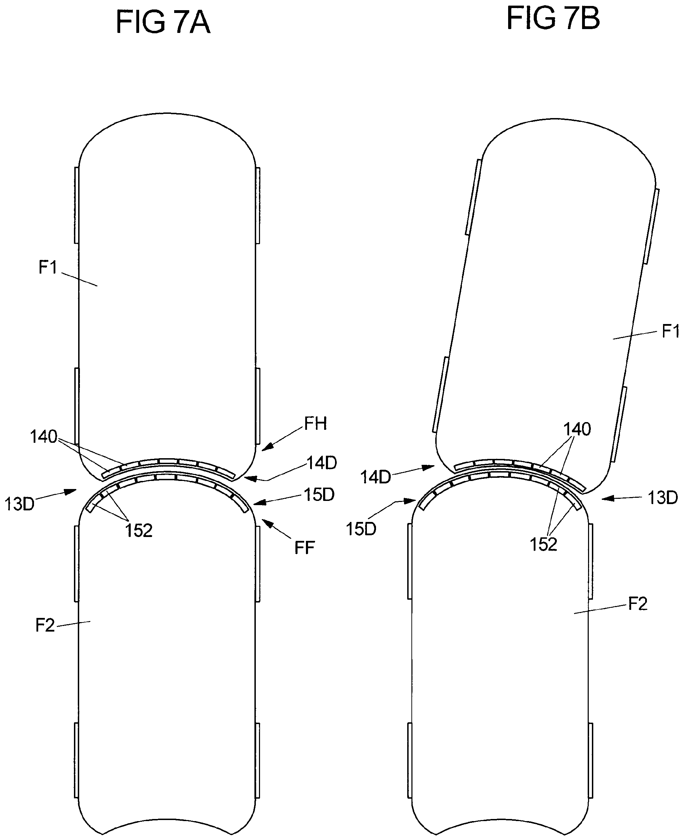

Fig. 7A und 7B zeigen ein erstes Fahrzeug F1 und ein zweites Fahrzeug F2 für das System 1 gemäß Fig. 1, die sich von den Fahrzeugen F1, F2 gemäß Fig. 2 nur durch ihre Kopplungsvorrichtung 13D unterscheiden. Die Kopplungsvorrichtung 13D ermöglicht eine induktive Kopplung. Die Kopplungsvorrichtung 13D weist ein erstes Kopplungselement 140 auf, welches am ersten Fahrzeug F1 montiert ist, und zwar im Beispiel gemäß Fig. 7A und 7B am Fahrzeugheck FH. Die Kopplungsvorrichtung 13D umfasst auch ein zweites Kopplungselement 150, welches am zweiten Fahrzeug F2 montiert ist, im gezeigten Beispiel an der Fahrzeugfront FF.

Die Fahrzeugfront FF des zweiten Fahrzeugs F2 und das Fahrzeugheck FH des ersten Fahrzeuges F1 weisen komplementäre Formen auf. Die Fahrzeugfront FF des zweiten Fahrzeugs F2 ist konvex ausgebildet. Das Fahrzeugheck FH des ersten Fahrzeuges F1 ist konkav ausgebildet. Entlang der Fahrzeugfront FF des zweiten Fahrzeugs F2 und entlang des Fahrzeughecks FH des ersten Fahrzeugs F1 sind mehrere Induktionsspulen 152, 140 der Kopplungsvorrichtung 13D angeordnet. Induktionsspulen 152 des Kopplungselements 150 des zweiten Fahrzeugs F2 bilden eine konvexe Anordnung. Induktionsspulen 140 des Kopplungselements des ersten Fahrzeugs F1 bilden eine dazu passende Konkave Anordnung. Beispielsweise sind die Induktionsspulen 140, 152 entlang entsprechend geformter Stoßstangen der Fahrzeuge F1, F2 angeordnet, insbesondere entlang der vollen Breite der Stoßstangen.

Hierdurch kann auch in Kurvenfahrten eine besonders starke induktive Kopplung gewährleistet werden, weil stets mehrere Induktionsspulen 140, 152 direkt einander gegenüberliegen.

Je weiter die Kopplungselemente der induktiven Kopplungsvorrichtungen 13A, 13B, 13D voneinander entfernt sind, desto geringer ist die Effizienz der des induktiven Ladevorgangs. Ein die Reichweite des Arms 150 übersteigender Abstand verhindert eine direkte elektrische Kontaktierung der Kopplungsvorrichtung 13C gemäß Fig. 5A-6B. Je näher beide Fahrzeuge F1, F2 einander kommen, desto größer ist das Risiko eine Kollision der Fahrzeuge F1, F2, z.B. durch ein plötzliches Bremsmanöver des vorausfahrenden Fahrzeugs.

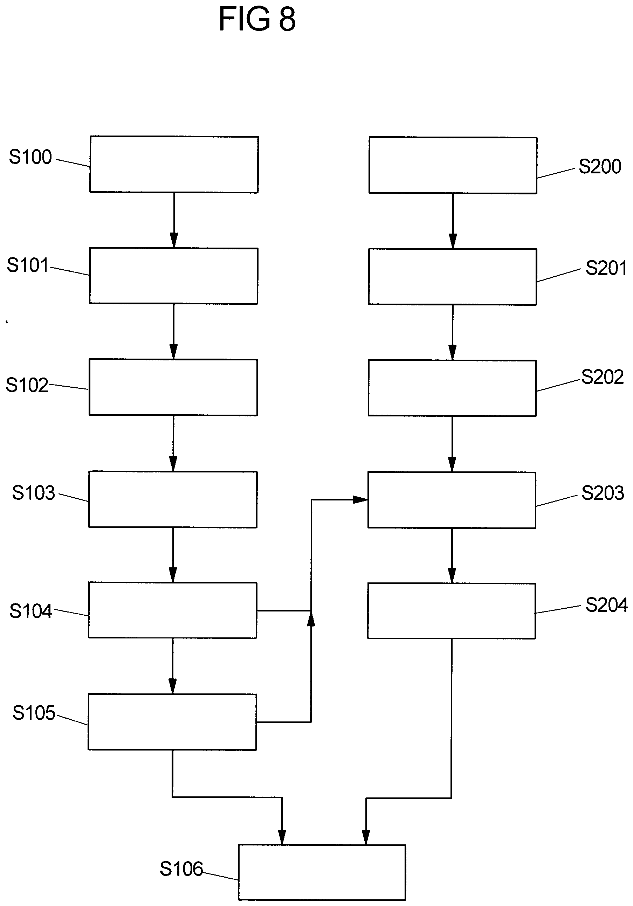

Daher sollte der Abstand A der Fahrzeuge F1, F2 zueinander geringer sein als ein vorgegebener Höchstabstand Amax und größer als ein vorgegebener Mindestabstand Amin. Dies wird durch folgende, in Fig. 8 gezeigte Verfahrensschritte ermöglicht:
In Schritt S200 wird das elektrisch angetriebene erste Fahrzeug F1 bereitgestellt, welches den elektrischen Energiespeicher 10 umfasst, wobei mittels darin gespeicherter Energie das erste Fahrzeug F1 elektrisch antreibbar ist und wobei der Energiespeicher 10 elektrische Energie abgeben kann, insbesondere einen Energieüberschuss aufweist.

In Schritt S201 wird das elektrisch angetriebene zweite Fahrzeug F2 bereitgestellt, welches den elektrischen Energiespeicher 10 umfasst, wobei mittels darin gespeicherter Energie das zweite Fahrzeug F2 elektrisch antreibbar ist und wobei der Energiespeicher 10 elektrische Energie aufnehmen kann, insbesondere einen Energiebedarf aufweist.

In Schritt S202 wird das erste Fahrzeug F1 entlang der ersten Route R1 und das zweite Fahrzeug F2 entlang der zweiten Route R2 derart gesteuert, dass sich die beiden Fahrzeuge F1, F2 zumindest entlang des übereinstimmenden Routenabschnitts RA mit dem Abstand A zueinander bewegen.

In Schritt S203 werden Informationen bezüglich eines Fahrzustandes zumindest eines der beiden Fahrzeuge F1, F2 zwischen dem ersten und dem zweiten Fahrzeug F1, F2 übermittelt. Dies erfolgt z.B. durch direkte Kommunikation zwischen den Fahrzeugen F1, F2 und/oder durch Kommunikation über die Zentrale Z. Optional wird anhand der übermittelten Informationen eine Vorhersage eines Fahrzustandes oder Fahrverhaltens eines der beiden oder beider Fahrzeuge F1, F2 berechnet.

In Schritt S204 wird der Abstand A zwischen den Fahrzeugen F1, F2 durch Steuern des ersten und/oder des zweiten Fahrzeugs F1, F2 basierend auf den übermittelten Informationen derart geregelt oder eingestellt, dass der Abstand A während der Bewegung beider Fahrzeuge F1, F2 entlang des übereinstimmenden Routenabschnitts RA größer als der vorgegebene Mindestabstand Amin und kleiner als der vorgegebene Höchstabstand Amax ist.

In Schritt S106 wird dann elektrische Energie vom Energiespeicher 10 des ersten Fahrzeugs F1 mittels der jeweiligen Kopplungsvorrichtung 13A-13D an den Energiespeicher 10 des zweiten Fahrzeugs F2 übertragen, während der Abstand A bei der Bewegung beider Fahrzeuge F1, F2 entlang des übereinstimmenden Routenabschnitts RA größer als der Mindestabstand Amin und kleiner als der Höchstabstand Amax ist.

In Schritt S204 kann eines der Fahrzeuge (z.B. das zweite Fahrzeug F2) seinen Abstand zum anderen Fahrzeug messen und in Abhängigkeit von Ergebnissen dieser Messung seine relative Lage zu dem anderen Fahrzeug regeln. Dabei ist kein Austausch von Informationen notwendig und der Schritt S203 ist optional. Dann addieren sich während der Fahrt allerdings mehrere Latenzen, insbesondere folgende: eine Sensorlatenz, eine Kognitionslatenz (bis zum Einleiten einer Verhaltensänderung des Fahrzeugs) und eine Motorlatenz (nach der die Verhaltensänderung registrierbar ist) des anderen Fahrzeugs, sowie eine Sensorlatenz, Kognitionslatenz und Motorlatenz des den Abstand regelnden Fahrzeugs.

Um die Reaktionszeit des zweiten Fahrzeugs F2 zu verringern, kann z.B. das erste Fahrzeug F1 Istzustände, z.B. seiner Geschwindigkeit und/oder Beschleunigung an das zweite Fahrzeug F2 senden, damit dieses eine Messung und die damit verbundene Latenz einsparen kann. Alternativ oder zusätzlich sendet das zweite Fahrzeug F2 aktuelle oder zukünftige Steuerbefehle (z.B. Sollwerte einer Geschwindigkeit und/oder Beschleunigung) an das zweite Fahrzeug F2. Das zweite Fahrzeug F2 kann anhand dieser Steuerbefehle und durch ein Vorhersagemodell einen erwarteten Istzustand des ersten Fahrzeugs F1 berechnen. Eingangsparameter des Vorhersagemodells sind z.B. eine Geschwindigkeit und eine Beschleunigung, optional auch eine Steigung der Fahrbahn und/oder Wind- und Wetterverhältnisse. Das erste Fahrzeug F1 kann seine angekündigten Steuerbefehle um eine vorbestimmte oder vorbestimmbare Latenz verzögert umsetzen, um die Fahrzeuge F1, F2 noch besser zu synchronisieren.

Optional berechnet das erste Fahrzeug F1 mittels eines Modells eine Vorhersage von zukünftigen Steuerbefehlen (für sich, z.B. für die kommenden Sekunden). Diese vorhergesagten Steuerbefehle kann das erste Fahrzeug F1 an das zweite Fahrzeug F2 senden. Das zweite Fahrzeug F2 kann anhand dieser vorhergesagten Steuerbefehle Schwankungen des Fahrzeugabstandes minimieren.

Optional aktualisiert das erste Fahrzeug F1 in jedem Zeitschritt ein Modell seiner zukünftigen Aktionen (insbesondere Steuerbefehle). Dieses Modell könnte mehrere unterschiedliche Szenarien und eine Wahrscheinlichkeit ihrer Ausführung (nebenläufig) enthalten (z.B. Überholmanöver, Bremsmanöver oder Spurwechsel als entsprechende Bewegungstrajektorien, inklusive Geschwindigkeiten und Beschleunigungen, etc. über der Zeit mit jeweiliger Wahrscheinlichkeit). Das zweite Fahrzeug F2 könnte, gegeben eigene Sensordaten, oder vom ersten Fahrzeug F1 weitergeleitete Sensordaten und unter Benutzung des Modells des ersten Fahrzeugs F1, eine Vorhersage errechnen, welche vorhergesagten Steuerbefehle das erste Fahrzeug F1 an das zweite Fahrzeug F2 senden wird.

Bei dem Schritt S204 kann also beispielsweise das zweite Fahrzeug F2 den Abstand A zum ersten Fahrzeug F1 durch Prädiktion der Bewegung des ersten Fahrzeugs F1 regeln. Die Regelung des zweiten Fahrzeugs F2 erfolgt z.B. durch eine vom ersten Fahrzeug F1 an das zweite Fahrzeug übermittelte Echtzeitvorhersage seines Fahrverhaltens oder Fahrzustands.

Dies kann verschiedene Informationen, insbesondere eine Hierarchie von Informationen umfassen, wie z.B. die Vorhersage der Fahrzeugbeschleunigung (positiv oder negativ) etwa in den jeweils zukünftigen Zehnteln einer Sekunde, geplante Richtungswechsel z.B. über einige zukünftige Sekunden, und/oder Sensordaten oder Straßeneigenschaften, die Vorhersagen auf das Fahrzeugverhalten oder den Fahrzustand erlauben, wie z.B. in einem Speicher eines der Fahrzeuge F1, F2 oder der Zentrale Z registrierte Schlaglöcher.

Alternativ oder zusätzlich kann das erste Fahrzeug F1 den Abstand A zum zweiten Fahrzeug F2 regeln, indem es das zweite Fahrzeug F2 kontrolliert. Als vorausfahrendes Fahrzeug hat das erste Fahrzeug F1 die relevanten Informationen, die zur Steuerung des Fahrzeugzuges F1, F2 benötigt werden. Daher kann die Fahrsteuerung vom zweiten Fahrzeug F2 an das erste Fahrzeug F1 abgegeben werden. Hier kann das zweite Fahrzeug F2 Befehle vom ersten Fahrzeug F1 empfangen und direkt umsetzen (insbesondere durch die Steuerung eines Elektromotors, einer Bremse und/oder eines Lenkwinkels). Optional (und falls möglich) verzögert das erste Fahrzeug F1 seine eigenen Steuerbefehle, um eine Sendelatenz der Befehle an das zweite Fahrzeug F2 auszugleichen. Das erste Fahrzeug F1 kann bei seiner Steuerung des Fahrzeugzuges F1, F2 das Verhalten des zweiten Fahrzeugs F2 vorhersagen, indem es ein vorher übertragenes Fahrzeugmodell benutzt. Dieses Fahrzeugmodell umfasst z.B. Kennzahlen, die das Verhalten des zweiten Fahrzeugs F2, bei gegeben Steuerungsbefehlen für eine Zahl von Zeitschritten in der Zukunft errechnen kann. Das Fahrzeugmodell kann das zweite Fahrzeug F2 an das erste Fahrzeug senden (z.B. als Handshake). Das Fahrzeugmodell kann Motorwerte in entsprechende zu erwartende, gemessene Istwerte prädizieren und kann optional durch das erste Fahrzeug F1 invers verwendet werden (gewünschtes Verhalten zu Motorwerten), um die Motorwerte für das zweite Fahrzeug F2 zu berechnen, die zum Verhalten führen, das das erste Fahrzeug F1 selbst für sich erwartet.

Das zweite Fahrzeug F2 kann eine dedizierte Schnittstelle anbieten, über die das erste Fahrzeug F1 Zielwerte des Fahrverhaltens oder des Fahrzustandes des zweiten Fahrzeugs F2 (zu einem zukünftigen Zeitpunkt) an das zweite Fahrzeug F2 sendet. Das zweite Fahrzeug F2 kann daraufhin eine eigene Regelschleife anwenden (und dabei optional ein Modell des eigenen zukünftigen Fahrverhaltens oder Fahrzustands), um die Zielvorgaben des ersten Fahrzeugs F1 zu erfüllen.

Optional tauschen beide Fahrzeuge F1, F2 beiderseits Informationen aus. Die Fahrzeuge F1, F2 können sich z.B. eine Planung des zukünftigen (jeweils eigenen) Fahrverhaltens oder Fahrzustands senden, um ihre jeweilige Vorhersage des Fahrverhaltens oder Fahrzustands eines oder beider Fahrzeuge F1, F2 zu verbessern.

Alternativ ist es aber auch möglich, ohne Informationsaustausch zwischen den Fahrzeugen F1, F2 den Abstand zu regeln. Unabhängig vom ersten Fahrzeug F1 kann das zweite Fahrzeug F2 seinen Abstand und seine relative Lage zum ersten Fahrzeug F1 messen und seine Beschleunigung derart regeln, dass der Abstand konstant bleibt. Dies kann allerdings eine sehr schnelle Umsetzung von Kontrollbefehlen erfordern und entsprechend schnelle Sensoren notwendig machen, also mit einer kleinen zeitlichen Latenz und einer hohen zeitlichen Abtastrate. Auch können beide Fahrzeuge F1, F2 den Abstand zueinander messen und regeln.

Ermittelt ein Fahrzeug einen Bedarf an Energie, kann es eine Anfrage an die Zentrale Z senden. Alternativ oder zusätzlich überwacht die Zentrale Z die Ladestände mehrerer Fahrzeuge und ermittelt, optional unter Berücksichtigung der jeweiligen Routenplanung, einen Bedarf oder Überschuss an gespeicherter Energie. Das System 1 führt dann die folgenden Schritte aus.

In Schritt S100 wird ein elektrisch angetriebenes erstes Fahrzeug F1 ermittelt und bereitgestellt, welches einen elektrischen Energiespeicher 10 umfasst, wobei mittels darin gespeicherter Energie das erste Fahrzeug F1 elektrisch antreibbar ist und wobei der Energiespeicher 10 elektrische Energie abgeben kann (insbesondere einen Energieüberschuss aufweist) und wobei sich das erste Fahrzeug F1 entlang einer ersten Route R1 aktuell bewegt oder zukünftig bewegt werden soll, z.B. durch Programmierung eines Navigationssystems.

In Schritt S101 wird ein elektrisch angetriebenes zweites Fahrzeug F2 ermittelt und bereitgestellt. Dabei handelt es sich beispielsweise um das Fahrzeug, welches die Anfrage an die Zentrale Z gesendet hatte. Das zweite Fahrzeug umfasst einen elektrischen Energiespeicher 10, wobei mittels darin gespeicherter Energie das zweite Fahrzeug F2 elektrisch antreibbar ist und wobei der Energiespeicher 10 elektrische Energie aufnehmen kann (insbesondere einen Energiebedarf aufweist) und wobei sich das zweite Fahrzeug F2 entlang einer zweiten Route R2 bewegt oder bewegt werden soll.

Selbstverständlich kann der Schritt S101 auch vor dem Schritt S100 durchgeführt werden. In Abhängigkeit von dem Aufenthaltsort und/oder dem Verlauf der zweiten Route R2 des zweiten Fahrzeugs F2 kann dann ein erstes Fahrzeug F1 ermittelt (z.B. aus einer großen Anzahl möglicher erster Fahrzeuge ausgewählt) und bereitgestellt werden, welches z.B. einen ähnlichen Aufenthaltsort, Verlauf der ersten Route R1 und/oder ausreichenden Ladestand des Energiespeichers 10 aufweist.

Im optionalen Schritt S102 wird die erste Route R1 und/oder im optionalen Schritt S103 die zweite Route R2 derart geändert, dass beide Routen R1, R2 oder, falls eine oder beide Routen geändert wurden, die geänderte(n) Route(n) R1', R2' zumindest entlang eines Routenabschnitts RA oder entlang eines verlängerten Routenabschnitts übereinstimmen. Alternativ können solche Fahrzeuge in den Schritten S100, S101 ermittelt und als erste und zweite Fahrzeuge F1, F2 bereitgestellt werden, die bereits Routen R1, R2 mit einem übereinstimmenden Routenabschnitt RA aufweisen.

In Schritt S104 wird das erste Fahrzeug F1 entlang der ersten Route R1 oder, falls diese geändert wurde, entlang der geänderten ersten Route R1' gesteuert und das zweite Fahrzeug F2 wird entlang der zweiten Route R2 oder, falls diese geändert wurde, entlang der geänderten zweiten Route R2` gesteuert, und zwar jeweils derart, dass sich die beiden Fahrzeuge F1, F2 entlang des übereinstimmenden Routenabschnitts RA in einem Anstand A zueinander bewegen, der kleiner ist als ein vorgegebener Höchstabstand Amax. Der Höchstabstand Amax beträgt z.B. 50 cm, 1 m, 2 m oder 5 m. Optional werden zwischen den Fahrzeugen F1, F2 befindliche Fahrzeuge durch das bereits weiter oben beschriebene Einleiten zumindest eines Überholmanövers aus dem Zwischenraum entfernt (Schritt S105).

In Schritt S106 wird elektrische Energie vom Energiespeicher 10 des ersten Fahrzeugs F1 an F1, F2 entlang des übereinstimmenden Routenabschnitts RA bewegen und/oder sich auf dem übereinstimmenden Routenabschnitt RA befinden. Optional erfolgt dies über ein oder mehrere Fahrzeuge F3, die sich zwischen dem ersten und dem zweiten Fahrzeug F1, F2 befinden.

Auf diese Weise ist es möglich, ein Fahrzeug ohne Zwischenstopp aufzuladen und so die Reichweite des Fahrzeugs zu erhöhen.

Um die Effizienz der Energieübertragung zu erhöhen (oder um die Fahrzeuge F1, F2 in einen Abstand A zueinander zu bringen, der mittels des Arms 150 überbrückbar ist), kann das Verfahren von Schritt S104 oder Schritt S105 zum Schritt S203 fortschreiten.

Die Schritte S203, S204, S106 und/oder S104 können gleichzeitig ausgeführt werden.

Das System 1 weist Mittel zur Durchführung der in Fig. 8 gezeigten Verfahrensschritte auf, insbesondere zumindest das erste und das zweite Fahrzeug F1, F2, zumindest eine der hierin beschriebenen Kopplungsvorrichtungen 13A-13D, und/oder die Zentrale Z.

Generell können beide Fahrzeuge sowohl ein erstes Kopplungselement 14A-14D als auch ein zweites Kopplungselement 15A-15D aufweisen. Auch kann die Anordnung des ersten Kopplungselements 14A-14D und des zweiten Kopplungselements 15A-15D am ersten und zweiten Fahrzeug F1, F2 gegenüber den in den Figuren 2 bis 7B gezeigten Anordnungen vertauscht sein.

Optional sind das erste und das zweite Fahrzeug F1, F2 im Wesentlichen baugleich.

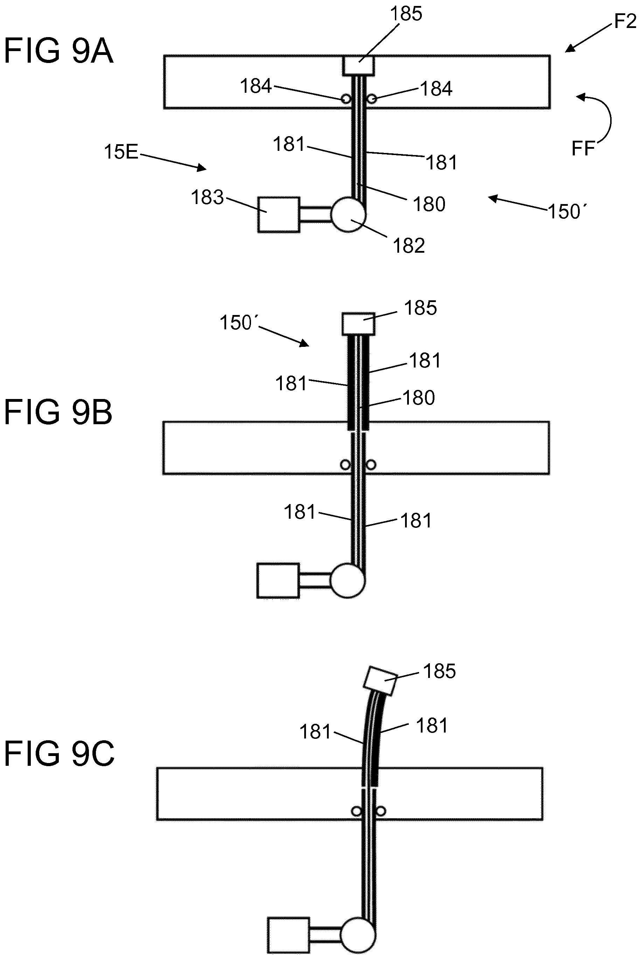

Fig. 9A bis 9C zeigen ein Ausführungsbeispiel eines (zweiten) Kopplungselements 15E einer Kopplungsvorrichtung für ein Fahrzeug F2, z.B. ein Fahrzeug des Systems gemäß Fig. 1 und/oder zur Verwendung im Verfahren gemäß Fig. 8.

Das Kopplungselement 15E ist an der Fahrzeugfront FF (konkret am Stoßfänger) des Fahrzeugs F2 angeordnet. Das Kopplungselement 15E umfasst einen ausfahrbaren Arm 150`. Der Ausfahrbare Arm 150' umfasst einen Kupplungskopf 185. Der Kupplungskopf 185 ist zum Übertragen von Energie ausgebildet. Optional ist der Kupplungskopf 185 so wie der Spulenträger 153 gemäß Fig. 4A und 4B ausgebildet. Alternativ ist es möglich, dass der Kupplungskopf 185 so ausgebildet ist, wie die Kupplungskugel 155 gemäß Fig. 5A bis 6B.

Der Kupplungskopf 185 ist am Ende eines Kabels 180 angebracht. Das Kabel 180 ist ein elektrisches Kabel 180. Das Kabel 180 ist auf einer Kabelrolle 182 aufrollbar und von der Kabelrolle 182 abrollbar. Die Kabelrolle 182 umfasst optional einen Motor, um das Kabel wahlweise auf- oder abzurollen. Führungsrollen 184 am Stoßfänger des Fahrzeugs F2 führen das Kabel 180. Optional sind die Führungsrollen 184 motorisch angetrieben und insbesondere dazu ausgebildet, das Kabel 180 auszufahren (optional auch einzufahren).

Während Fig. 9A einen Zustand zeigt, in dem das Kabel 180 mit dem Kupplungskopf 185 eingefahren ist, zeigen die Fig. 9B und 9C jeweils einen Zustand, in dem das Kabel 180 mit dem Kupplungskopf 185 zumindest teilweise ausgefahren ist.

Der Arm 150' umfasst ferner pneumatische Muskeln 181. Die pneumatischen Muskeln 181 sind mittels eines Kompressors 183 aufblasbar, z.B. mit Luft oder einem anderen Fluid. Der Kompressor 183 ist am Fahrzeug F2 montiert. Die pneumatischen Muskeln 181 sind mittels des Kompressors 183 und/oder zusätzlicher steuerbarer Ventile entleerbar, d.h. Luft (oder allgemein das Fluid) kann aus den pneumatischen Muskeln 181 abgelassen werden.

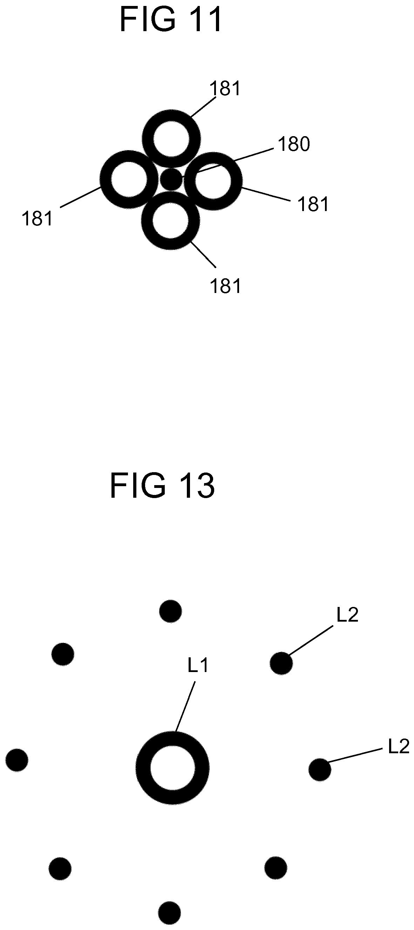

Die pneumatischen Muskeln 181 sind länglich und parallel zum Kabel 180 angeordnet. Konkret sind die pneumatischen Muskeln 181 am Kabel 180 befestigt. Im Beispiel gemäß Fig. 11 sind vier pneumatische Muskeln 181 um das Kabel 180 herum angeordnet, wobei auch eine andere Anzahl denkbar ist. Im Allgemeinen kann der Arm 150' zumindest einen, insbesondere zwei oder mehr pneumatische Muskeln 181 umfassen. Umfasst der Arm 150' nur einen pneumatischen Muskel 181, dann ist dieser z.B. an der Oberseite (in Bezug auf ein auf einem ebenen Untergrund befindliches Fahrzeug) des Kabels 180 angebracht.

Ein nicht aufgeblasener pneumatischer Muskel 181 ist flexibel, z.B. ähnlich flexibel wie das Kabel 180. Das Kabel 180 ist dann gemeinsam mit den pneumatischen Muskeln 181 auf die Kabelrolle 182 aufrollbar. Vor dem Aufrollen oder bei dem Aufrollen werden die pneumatischen Muskeln 181 (sofern aufgeblasen) entleert. Da dies je nach Ausbildung der pneumatischen Muskeln 181 eine bestimmte Zeitspanne benötigen kann, kann die Kabelrolle 182 so ausgebildet sein, dass sie den aufgerollten Arm 150' (auf der Innenseite) nachspannen kann.

Optional ist ein aufgeblasener pneumatischer Muskel 181 im Wesentlichen starr. Insbesondere ist ein aufgeblasener pneumatischer Muskel 181 weniger flexibel als ein nicht aufgeblasener. Gemäß Fig. 9B sind am aus dem Stoßfänger ausgefahrenen Abschnitt des Kabels 180 alle pneumatischen Muskeln 181 aufgeblasen. Die aufgeblasenen pneumatischen Muskeln 181 halten das Kabel 180 gerade, z.B. um den Kupplungskopf 185 mit einem Kupplungskopf eines anderen Fahrzeugs zu koppeln.

Ein pneumatischer Muskel 181 ist zudem im aufgeblasenen Zustand kürzer als im nicht aufgeblasenen Zustand.

Beispielsweise umfasst jeder pneumatische Muskel 181 einen (flexiblen) Schlauch, der sich unter Druck zusammenzieht. Der Schlauch ist z.B. von Fasern umschlossen, die in einem rautenförmigen Gelege angeordnet sind. Optional umfasst ein pneumatischer Muskel einen solchen umschlossenen Schlauch, alternativ eine Vielzahl solcher umschlossener Schläuche (entsprechend biologischer Muskelfasern).

Werden die pneumatischen Muskeln 181 eines Abschnitts des Kabels 180 unterschiedlich stark aufgeblasen oder werden einzelne oder mehrere, aber nicht alle, der pneumatischen Muskeln 181 aufgeblasen, dann wird das Kabel 180 gebogen, siehe Fig. 9C, worin der im Bild rechts dargestellte pneumatische Muskel 181 aufgeblasen ist, der gegenüberliegende hingegen nicht.

Wie insbesondere in Fig. 9B zu erkennen, umfasst der Arm 150' mehrere entlang der Längserstreckung des Kabels 180 hintereinander angeordnete pneumatische Muskeln 181. Hierdurch kann das Kabel 180 z.B. S-förmig gebogen werden. Es kann vorgesehen sein, dass entlang der gesamten ausfahrbaren Länge des Kabels 180 pneumatische Muskeln 181 angeordnet sind.

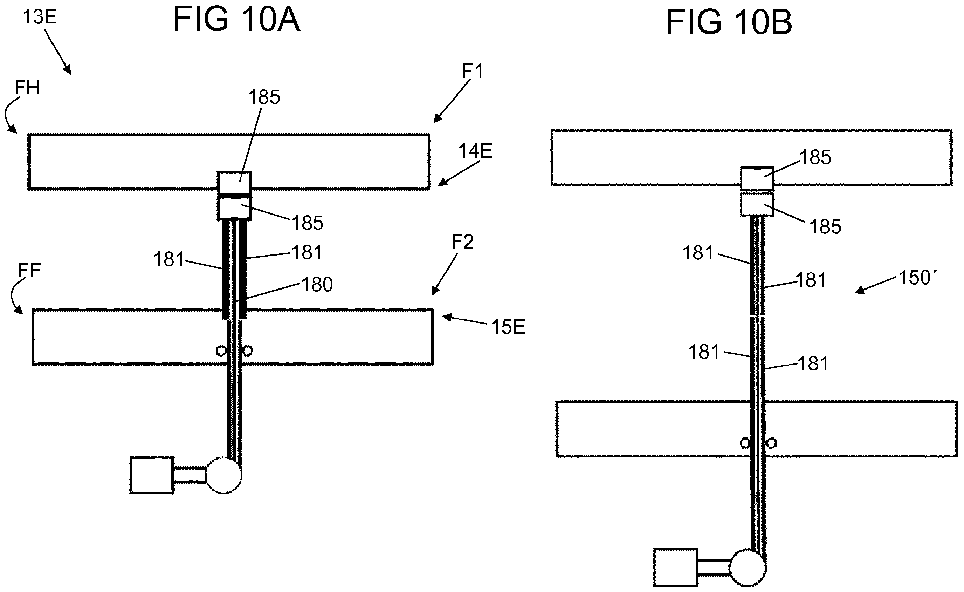

Die Fig. 10A und 10B zeigen das Fahrzeug F2 gemäß Fig. 9A bis 9C als zweites Fahrzeug F2 sowie ein damit über die Kopplungsvorrichtung 13E zum Übertragen von Energie gekoppeltes erstes Fahrzeug F1.

Das Kopplungselement 15E kann mit Sensoren ausgestattet sein und/oder die relative Lage des ersten Fahrzeugs F1 zum zweiten Fahrzeug F2 erhalten und in Abhängigkeit davon zumindest einen pneumatischen Muskel ansteuern. Das kann so erfolgen, dass der Kupplungskopf 185 auf den Kupplungskopf 185 des anderen Fahrzeugs F1 hin ausgerichtet wird. Alternativ oder zusätzlich werden das erste und/oder das zweite Fahrzeug F1, F2 so gesteuert, dass die Kupplungsköpfe 185 aufeinander ausgerichtet sind. Beide Kupplungsköpfe 185 werden dann z.B. magnetisch miteinander verriegelt.

Optional können einer oder mehrere pneumatische Muskeln 181 durch einen statischen Antagonisten ersetzt werden, z.B. in Form eines flexiblen, optional in eine Richtung vorgespannten Metallstreifens. Jeweils ein pneumatischer Muskel 181 ist beispielsweise in Bezug auf das Kabel 180 einem statischen Antagonisten gegenüberliegend angeordnet.

Eine Kopplung der Kupplungsköpfe 185 mittels des ausfahrbaren Arms 150' kann z.B. im Stillstand der Fahrzeuge F1, F2 (z.B. an einer roten Ampel) erfolgen, alternativ während der Fahrt, die hierzu optional auf eine vorgegebene Höchstgeschwindigkeit begrenzt wird. Dabei wird ein Abstand zwischen den Fahrzeugen F1, F2 eingestellt, den der Arm 150' überbrücken kann, z.B. 2 m.

Optional können die pneumatischen Muskeln 181 nach der Kopplung der Kupplungsköpfe 185 entspannt werden. So ist der Arm 150' flexibel und erlaubt eine gewisse Relativbewegung zwischen den Fahrzeugen F1, F2 (siehe insbesondere Fig. 10B). Das Kabel 180 kann nach dem Koppeln optional weiter ausrollbar sein, z.B. für einen größeren Sicherheitsabstand. Optional ist die Kabelrolle 182 vorgespannt und verhindert ein Durchhängen des Kabels 180.

Lösen sich die Kupplungsköpfe 185, z.B. durch eine zu große Relativbewegung zwischen den beiden Fahrzeugen F1, F2, so erkennt das das zweite Fahrzeug F2 (z.B. dessen Steuereinheit 11). In Reaktion darauf wird der Kompressor 183 so angesteuert, dass die pneumatischen Muskeln 181 aufgepumpt werden und das Kabel 180 eingerollt wird (wobei die pneumatischen Muskeln 181 wieder entspannt werden).

Der Kompressor 183 und die pneumatischen Muskeln 181 und/oder die Kabelrolle 182 können als Antrieb dienen, der dazu ausgebildet ist, den Arm 150` in Abhängigkeit vom Abstand zwischen den beiden Fahrzeugen F1, F2 und/oder von auf den Arm 150' einwirkenden Kräften und/oder Beschleunigungen zu bewegen.

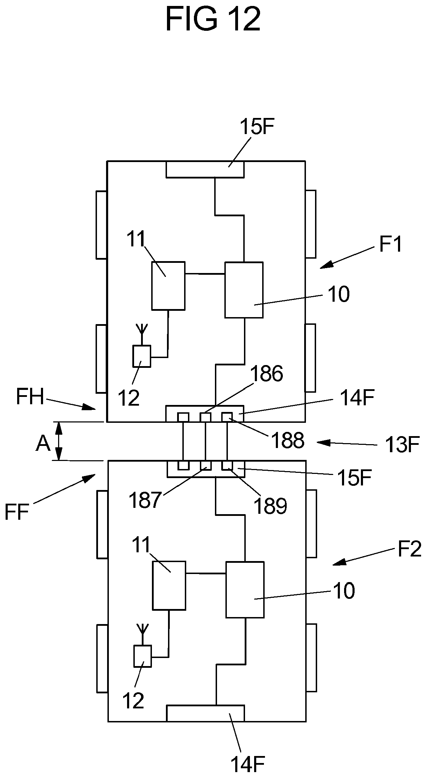

Fig. 12 zeigt zwei Fahrzeuge F1, F2 mit einer Kopplungsvorrichtung 13F, die dazu ausgebildet ist, Energie mittels elektromagnetischer Strahlung, insbesondere Licht (insbesondere in Infrarot oder Ultraviolett, alternativ sind auch sichtbare Wellenlängen denkbar) zu übertragen.

Das erste Fahrzeug F1 umfasst eine oder mehrere photovolatische Zellen 186, das zweite Fahrzeug F2 einen oder mehrere Laser 187 zum Übertragen von Energie. Die Richtung des Laserstrahls ist in Abhängigkeit von der relativen Lage der beiden Fahrzeuge F1, F2 zueinander steuerbar. Der Laser 187 zielt auf die photovoltaische Zelle 186. Übersteigt der Abstand der beiden Fahrzeuge F1, F2 zueinander einen vorgegebenen Höchstwert oder verlässt die photovoltaische Zelle 186 das Blickfeld des Lasers 187, schaltet der Laser 187 ab. Bei dem Laser 187 handelt es sich um einen Hochleistungslaser.

Optional umfasst das zweite Fahrzeug F2 einen oder mehrere weitere Laser 189, die eine geringere Leistung aufweisen können als der Hochleistungslaser 187. Die Laser 189 emittieren z.B. einen Ring aus Laserstrahlen im Wesentlichen parallel zum Laserstrahl des Hochleistungslasers 187. Um die photovoltaische Zelle 186 herum sind Reflektoren 188 angeordnet (z.B. in Form jeweils eines Retroreflektors). An jedem der Laser 189 ist ein Photorezeptor, z.B. eine Photodiode, eine Kamera oder dergleichen, vorgesehen, der (vom jeweiligen Laser 189 emittiertes) durch einen der Reflektoren 188 reflektiertes Licht erfasst. Die Laserstrahlen L2 der Laser 189 sind gemäß einem Ring um den Hochleistungslaserstrahl L1 des Hochleistungslasers 187 herum angeordnet, siehe Fig. 13. Wird einer oder werden mehrere der Laserstrahlen L2 des Rings blockiert, z.B. durch ein zwischen die Fahrzeuge F1, F2 tretendes Tier, registriert der Photorezeptor der jeweiligen Laser 189, dass der Laserstrahl L2 nicht länger reflektiert wird. Daraufhin kann der jeweilige Photorezeptor an den Hochleistungslaser 187 ein Signal senden, das ein Abschalten des Hochleistungslasers 187 bewirkt. Da die Photorezeptoren wesentlich schneller reagieren, als die Bewegung des Tiers bis zum Hochleistungslaserstrahl L1 gelangt, ist es möglich, den Hochleistungslaserstrahl L1 so schnell abzuschalten, dass das Tier nicht durch den Hochleistungslaserstrahl L1 erfasst wird.

Die Laser 189 und Reflektoren 188 bilden mehrere um den Hochleistungslaserstrahl L1 angeordnete Lichtschranken, wobei auch andere Arten von um den Hochleistungslaserstrahl L1 herum angeordnete Lichtschranken denkbar sind.

Optional sind die Lichtschranken 188, 189 kodiert, z.B. durch die Wellenlänge und/oder indem die Strahlen der Lichtschranken unterschiedlich gepulst werden. Es kann vorgesehen sein, dass der Hochleistungslaser 187 abgeschaltet wird, wenn zumindest eine der kodierten Lichtstrahlen nicht auf den jeweils zugeordneten Empfänger trifft. So kann verhindert werden, dass der Hochleistungslaser 187 an einer anderen Stelle auftrifft, als auf die photovoltaische Zelle 186, z.B. bei Relativbewegungen der Fahrzeuge F1, F2. Ferner können über die Strahlen der Lichtschranken 188 189 Informationen übertragen werden, z.B. über einen Fahrzustand.

### Bezugszeichenliste

- 1: System
- 10: Energiespeicher
- 11: Steuerungseinheit
- 12: Kommunikationseinheit
- 13A-13F: Kopplungsvorrichtung
- 14A-14F: erstes Kopplungselement
- 140: Induktionsspule
- 141: Spulenträger
- 142: Kupplungspfanne
- 143, 144: elektrischer Kontakt
- 145: Elektromagnet
- 146: Widerlager
- 15A-15F: zweites Kopplungselement
- 150, 150': Arm
- 151: Gelenk
- 152: Induktionsspule
- 153: Spulenträger
- 154: Gelenk
- 155: Kupplungskugel
- 156, 157: elektrischer Kontakt
- 158: Elektromagnet
- 159: Haken
- 16: Sensor
- 17: Antrieb
- 180: Kabel
- 181: pneumatischer Muskel
- 182: Kabelrolle
- 183: Kompressor
- 184: Führungsrolle
- 185: Kupplungskopf
- 186: photovoltaische Zelle
- 187: Laser
- 188: Reflektor
- 189: Laser
- A: Abstand
- Amin: Mindestabstand
- Amax: Höchstabstand
- F1, F2, F3: Fahrzeug
- FF: Fahrzeugfront
- FH: Fahrzeugheck
- L1: Hochleistungslaserstrahl
- L2: Laserstrahl
- R1, R2: Route
- R1', R2': geänderte Route
- RA: Routenabschnitt
- S: Fahrbahn
- Z: Zentrale

## Patentansprüche

1. Verfahren zum Austausch elektrischer Energie zwischen zumindest zwei sich bewegenden, elektrisch angetriebenen Fahrzeugen (F1, F2), umfassend die folgenden Schritte:
- Bereitstellen (S100; S200) eines elektrisch angetriebenen ersten Fahrzeugs (F1), welches einen elektrischen Energiespeicher (10) umfasst, wobei mittels darin gespeicherter Energie das erste Fahrzeug (F1) elektrisch antreibbar ist, wobei der Energiespeicher (10) elektrische Energie abgeben kann;
- Bereitstellen (S101; S201) eines elektrisch angetriebenen zweiten Fahrzeugs (F2), welches einen elektrischen Energiespeicher (10) umfasst, wobei mittels darin gespeicherter Energie das zweite Fahrzeug (F2) elektrisch antreibbar ist, wobei der Energiespeicher (10) elektrische Energie aufnehmen kann;
- Steuern (S202) des ersten Fahrzeugs (F1) entlang einer ersten Route (R1) und des zweiten Fahrzeugs (F2) entlang einer zweiten Route (R2) derart, dass sich die beiden Fahrzeuge (F1, F2) zumindest entlang eines übereinstimmenden Routenabschnitts (RA) mit einem Abstand (A) zueinander bewegen;
- Übermitteln (S203) von Informationen bezüglich eines Fahrzustandes des ersten Fahrzeugs (F1) von dem ersten Fahrzeug (F1) an das zweite Fahrzeug (F2) und/oder Informationen bezüglich eines Fahrzustandes des zweiten Fahrzeuges (F2) von dem zweiten Fahrzeug (F2) an das erste Fahrzeug (F1);
- Regelung (S204) des Abstands (A) zwischen den Fahrzeugen (F1, F2) durch Steuern des ersten und/oder des zweiten Fahrzeugs (F1, F2) basierend auf den übermittelten Informationen derart, dass der Abstand (A) während der Bewegung beider Fahrzeuge (F1, F2) größer als ein vorgegebener Mindestabstand (Amin) und kleiner als ein vorgegebener Höchstabstand (Amax) ist; und
- Übertragen (S106) von elektrischer Energie vom Energiespeicher (10) des ersten Fahrzeugs (F1) an den Energiespeicher (10) des zweiten Fahrzeugs (F2) während der Abstand (A) bei der Bewegung beider Fahrzeuge (F1, F2) größer als der Mindestabstand (Amin) und kleiner als der Höchstabstand (Amax) ist,
**dadurch gekennzeichnet dass** zumindest eines der beiden Fahrzeuge (F1, F2) Informationen über eine beabsichtigte Fahrbewegung und/oder Bewegungsänderung übermittelt und diese Fahrbewegung und/oder Bewegungsänderung mit einer vorgegebenen oder vorgebbaren Verzögerung durchführt, um eine Reaktionszeit des jeweils anderen Fahrzeugs (F1, F2) auszugleichen.

2. Verfahren nach Anspruch 1, **dadurch gekennzeichnet, dass** sich das erste Fahrzeug (F1) entlang einer ersten Route (R1) bewegt oder bewegt werden soll und sich das zweite Fahrzeug (F2) entlang einer zweiten Route (R2) bewegt oder bewegt werden soll und das Verfahren ferner folgende Schritte umfasst:
- Ändern (S102) der ersten Route (R1) und Ändern (S103) der zweiten Route (R2) derart, dass beide geänderten Routen (R1', R2') zumindest entlang eines Routenabschnitts (RA) oder entlang eines verlängerten Routenabschnitts übereinstimmen;
- Steuern (S104) des ersten Fahrzeugs (F1) entlang der geänderten ersten Route (R1') und des zweiten Fahrzeugs (F2) entlang der geänderten zweiten Route (R2') derart, dass sich die beiden Fahrzeuge (F1, F2) entlang des übereinstimmenden Routenabschnitts (RA) in einem Anstand (A) zueinander bewegen, der kleiner ist als ein vorgegebener Höchstabstand,
wobei der Schritt des Übertragens (S106) von elektrischer Energie vom Energiespeicher (10) des ersten Fahrzeugs (F1) an den Energiespeicher (10) des zweiten Fahrzeugs (F2) elektrische Energie übertragen wird, während sich beide Fahrzeuge (F1, F2) entlang des übereinstimmenden Routenabschnitts (RA) bewegen, wobei optional beide Fahrzeuge (F1, F2) als autonom fahrende Fahrzeuge ausgebildet sind und/oder dass das Steuern (S104) der Fahrzeuge (F1, F2) entlang der geänderten Routen (R1', R2') ein Abbremsen, ein Beschleunigen und/oder ein Anhalten des ersten und/oder des zweiten Fahrzeugs (F1, F2) umfasst.

3. Verfahren nach einem der Ansprüche 2, **dadurch gekennzeichnet, dass** sich ein drittes Fahrzeug (F3) in einem Zwischenraum zwischen dem ersten und dem zweiten Fahrzeug (F1, F2) befindet und das Übertragen (S106) von elektrischer Energie vom Energiespeicher (10) des ersten Fahrzeugs (F1) an den Energiespeicher (10) des zweiten Fahrzeugs (F2) durch das dritte Fahrzeug (F3) erfolgt, und/oder dass sich ein drittes Fahrzeug (F3) in einem Zwischenraum zwischen dem ersten und dem zweiten Fahrzeug (F1, F2) befindet und das Verfahren vor dem Schritt des Übertragens (S106) von elektrischer Energie den folgenden Schritt umfasst:
- Steuern (S105) des dritten Fahrzeugs (F3) derart, dass es aus dem Zwischenraum zwischen dem ersten und dem zweiten Fahrzeug (F1, F2) entfernt wird, insbesondere durch Einleiten eines Überholvorgangs durch Übermittlung zumindest eines Befehls an das erste, das zweite und/oder das dritte Fahrzeug (F1-F3).

4. Verfahren nach einem der vorherigen Ansprüche, **dadurch gekennzeichnet, dass** die übermittelten Informationen einen Ist-Fahrzustand, einen Soll-Fahrzustand und/oder einen erwarteten Fahrzustand umfassen.

5. Verfahren nach einem der vorherigen Ansprüche, **dadurch gekennzeichnet, dass** sowohl Informationen bezüglich eines Fahrzustandes des ersten Fahrzeugs (F1) an das zweite Fahrzeug (F2) als auch Informationen bezüglich eines Fahrzustandes des zweiten Fahrzeugs (F2) an das erste Fahrzeug (F1) übermittelt werden und die Regelung (S204) des Abstands (A) zwischen den Fahrzeugen (F1, F2) durch Steuern des ersten und des zweiten Fahrzeugs (F1, F2) basierend auf den übermittelten Informationen erfolgt.

6. Verfahren nach einem der vorherigen Ansprüche, **dadurch gekennzeichnet, dass** das Übertragen (S106) von elektrischer Energie vom Energiespeicher (10) des ersten Fahrzeugs (F1) an den Energiespeicher (10) des zweiten Fahrzeugs (F2) über eine Kopplungsvorrichtung (13F) erfolgt, die Energie in Form von Licht, insbesondere in Form eines Laserstrahls (L1) überträgt, wobei optional um den Laserstrahl (L1) herum mehrere Lichtschranken angeordnet sind.

7. System (1) zum Austausch elektrischer Energie zwischen zumindest zwei sich bewegenden, elektrisch angetriebenen Fahrzeugen (F1,F2) nach Anspruch 14, umfassend:
- ein elektrisch angetriebenes erstes Fahrzeug (F1), welches einen elektrischen Energiespeicher (10) umfasst, wobei mittels darin gespeicherter Energie das erste Fahrzeug (F1) elektrisch antreibbar ist;
- ein elektrisch angetriebenes zweites Fahrzeug (F2), welches einen elektrischen Energiespeicher (10) umfasst, wobei mittels darin gespeicherter Energie das zweite Fahrzeug (F2) elektrisch antreibbar ist; und
- Mittel zur Ausführung der folgenden Schritte:
o Steuern (S202) des ersten Fahrzeugs (F1) entlang einer ersten Route (R1) und des zweiten Fahrzeugs (F2) entlang einer zweiten Route (R2) derart, dass sich die beiden Fahrzeuge (F1, F2) zumindest entlang eines übereinstimmenden Routenabschnitts (RA) mit einem Abstand (A) zueinander bewegen;
o Übermitteln (S203) von Informationen bezüglich eines Fahrzustandes des ersten Fahrzeugs (F1) von dem ersten Fahrzeug (F1) an das zweite Fahrzeug (F2) und/oder Informationen bezüglich eines Fahrzustandes des zweiten Fahrzeuges (F2) von dem zweiten Fahrzeug (F2) an das erste Fahrzeug (F1);
o Regelung (S204) des Abstands (A) zwischen den Fahrzeugen (F1, F2) durch Steuern des ersten und/oder des zweiten Fahrzeugs (F1, F2) basierend auf den übermittelten Informationen derart, dass der Abstand (A) während der Bewegung beider Fahrzeuge (F1, F2) größer als ein vorgegebener Mindestabstand (Amin) und kleiner als ein vorgegebener Höchstabstand (Amax) ist; und
o Übertragen (S106) von elektrischer Energie vom Energiespeicher (10) des ersten Fahrzeugs (F1) an den Energiespeicher (10) des zweiten Fahrzeugs (F2) während der Abstand (A) bei der Bewegung beider Fahrzeuge (F1, F2) größer als der Mindestabstand (Amin) und kleiner als der Höchstabstand (Amax) ist,
**dadurch gekennzeichnet dass** zumindest eines der beiden Fahrzeuge (F1, F2) dazu eingerichtet ist, Informationen über eine beabsichtigte Fahrbewegung und/oder Bewegungsänderung zu übermitteln und diese Fahrbewegung und/oder Bewegungsänderung mit einer vorgegebenen oder vorgebbaren Verzögerung durchzuführen, um eine Reaktionszeit des jeweils anderen Fahrzeugs (F1, F2) auszugleichen.

8. System (1) nach Anspruch 7, umfassend:
- eine Kopplungsvorrichtung (13B-13C; 13E) zum Übertragen von elektrischer Energie zwischen dem Energiespeicher (10) des ersten Fahrzeugs (F1) und dem Energiespeicher (10) des zweiten Fahrzeugs (F2) durch eine elektrische Kopplung eines am ersten Fahrzeug (F1) festgelegten ersten Kopplungselements (14B-14C; 14E) der Kopplungsvorrichtung (13B-13C; 13E) mit einem am zweiten Fahrzeug (F2) festgelegten zweiten Kopplungselement (15B-15C; 15E) der Kopplungsvorrichtung (13B-13C),
wobei zumindest eines der beiden Kopplungselemente (14B-14C; 14E, 15B-15C; 15E) einen bezüglich des Fahrzeugs (F1, F2), an dem es festgelegt ist, bewegbaren Arm (150; 150') umfasst, der ausgebildet ist, einen Abstand (A) zwischen den beiden Fahrzeugen (F1, F2) bis zu einem vorgegebenen Höchstabstand (Amax) zumindest teilweise zu überbrücken.

9. System (1) nach Anspruch 8, **dadurch gekennzeichnet, dass** die beiden Kopplungselemente (14B-14C; 14E, 15B-15C; 14E) magnetisch und/oder mechanisch miteinander verriegelbar sind.

10. System (1) nach einem der Ansprüche 8 oder 9, **dadurch gekennzeichnet, dass** die Kopplungsvorrichtung (13B-13C; 13E) einen Antrieb (17; 181-183) umfasst, der dazu ausgebildet ist, den Arm (150; 150') in Abhängigkeit von einem Abstand (A) zwischen den beiden Fahrzeugen (F1, F2) und/oder von auf den Arm (150; 150') einwirkenden Kräften und/oder Beschleunigungen zu bewegen.

11. System (1) nach einem der Ansprüche 8 bis 10, **dadurch gekennzeichnet, dass** der Arm (150') zumindest einen pneumatischen Muskel (181) umfasst.

12. System (1) nach einem der Ansprüche 8 bis 11, **dadurch gekennzeichnet, dass** die Kopplungsvorrichtung (13B-13C; 13E) zumindest einen Sensor (16) zur Messung von auf den Arm (150; 150') einwirkenden Kräften und/oder Beschleunigungen und einen Antrieb (17; 181-183) zum Bewegen des Arms (150; 150') umfasst, wobei die Kopplungsvorrichtung (13B-13C; 13E) ausgebildet ist, in Abhängigkeit von zumindest einem von dem Sensor (16) bereitgestellten Wert den Antrieb (17; 181-183) anzusteuern.

13. System (1) nach Anspruch 7, umfassend:
- eine Kopplungsvorrichtung (13D) zum Übertragen von elektrischer Energie zwischen dem Energiespeicher (10) des ersten Fahrzeugs (F1) und dem Energiespeicher (10) des zweiten Fahrzeugs (F2) durch eine induktive elektrische Kopplung eines am ersten Fahrzeug (F1) festgelegten ersten Kopplungselements (14D) der Kopplungsvorrichtung (13D) mit einem am zweiten Fahrzeug (F2) festgelegten zweiten Kopplungselement (15D) der Kopplungsvorrichtung (130),
wobei das erste und/oder das zweite Kopplungselement (140, 15D) mehrere Induktionsspulen (140, 152) umfasst/umfassen, die entlang eines konkav oder konvex ausgebildeten Abschnitts einer Fahrzeugfront (FF) oder eines Fahrzeughecks (FH) des ersten und/oder zweiten Fahrzeugs (F1, F2) angeordnet sind, wobei optional das erste Kopplungselement (14D) mehrere Induktionsspulen (140) umfasst, die entlang eines konkav ausgebildeten Abschnitts des Fahrzeughecks (FH) des ersten Fahrzeugs (F1) angeordnet sind, und das zweite Kopplungselement (15D) mehrere Induktionsspulen (152) umfasst, die entlang eines konvex ausgebildeten Abschnitts der Fahrzeugfront (FF) des zweiten Fahrzeugs (F2) angeordnet sind.

14. Elektrisch angetriebenes Fahrzeug (F1, F2) umfassend einen elektrischen Energiespeicher (10), wobei mittels darin gespeicherter Energie das Fahrzeug (F1, F2) elektrisch antreibbar ist, und ein erstes Kopplungselement (14A-14F) und/oder ein zweites Kopplungselement (15A-15F) einer Kopplungsvorrichtung (13A-13F) zum Übertragen von elektrischer Energie zwischen dem Energiespeicher (10) des Fahrzeugs (F1, F2) und einem Energiespeicher (10) eines weiteren Fahrzeugs (F1, F2), wobei das Fahrzeug (F1, F2) ausgebildet und eingerichtet ist zur Ausführung der folgenden Schritte:
- Steuern (S202) des Fahrzeugs (F1) entlang einer ersten Route (R1) derart, dass sich die das Fahrzeug (F1, F2) und das entlang einer zweiten Route (R2) gesteuerte weitere Fahrzeug (F1, F2) zumindest entlang eines übereinstimmenden Routenabschnitts (RA) mit einem Abstand (A) zueinander bewegen;
- Übermitteln (S203) von Informationen bezüglich eines Fahrzustandes des Fahrzeugs (F1, F2) von dem Fahrzeug (F1, F2) an das weitere Fahrzeug (F1, F2);
- Regelung (S204) des Abstands (A) zwischen den Fahrzeugen (F1, F2) durch Steuern des Fahrzeugs (F1, F2) basierend auf den übermittelten Informationen derart, dass der Abstand (A) während der Bewegung beider Fahrzeuge (F1, F2) größer als ein vorgegebener Mindestabstand (Amin) und kleiner als ein vorgegebener Höchstabstand (Amax) ist; und
- Übertragen (S106) von elektrischer Energie vom Energiespeicher (10) des Fahrzeugs (F1, F2) an den Energiespeicher (10) des weiteren Fahrzeugs (F1, F2) während der Abstand (A) bei der Bewegung beider Fahrzeuge (F1, F2) größer als der Mindestabstand (Amin) und kleiner als der Höchstabstand (Amax) ist,
**dadurch gekennzeichnet dass** das Fahrzeug (F1, F2) Informationen über eine beabsichtigte Fahrbewegung und/oder Bewegungsänderung übermittelt und diese Fahrbewegung und/oder Bewegungsänderung mit einer vorgegebenen oder vorgebbaren Verzögerung durchführt, um eine Reaktionszeit des weiteren Fahrzeugs (F1, F2) auszugleichen.

## Claims

1. A method for exchanging electric energy between at least two moving, electrically driven vehicles (F1, F2), comprising the following steps:
- providing (S100; S200) an electrically driven first vehicle (F1) that comprises an electric energy accumulator (10), wherein by means of energy stored therein the first vehicle (F1) can be driven electrically, wherein the energy accumulator (10) can give off electric energy;
- providing (S101; S201) an electrically driven second vehicle (F2) that comprises an electric energy accumulator (10), wherein by means of energy stored therein the second vehicle (F2) can be driven electrically, wherein the energy accumulator (10) can absorb electric energy;
- steering (S202) the first vehicle (F1) along a first route (R1) and the second vehicle (F2) along a second route (R2) in such a way that the two vehicles (F1, F2) move at a distance (A) to each other at least along a corresponding route section (RA);
- transmitting (S203) information with respect to a driving state of the first vehicle (F1) from the first vehicle (F1) to the second vehicle (F2) and/or information with respect to a driving state of the second vehicle (F2) from the second vehicle (F2) to the first vehicle (F1);
- regulating (S204) the distance (A) between the vehicles (F1, F2) by steering the first and/or the second vehicle (F1, F2) based on the transmitted information in such a way that during the movement of the two vehicles (F1, F2) the distance (A) is greater than a specified minimum distance (Amin) and less than a specified maximum distance (Amax); and
- transmitting (S106) electric energy from the energy accumulator (10) of the first vehicle (F1) to the energy accumulator (10) of the second vehicle (F2), while during the movement of the two vehicles (F1, F2) the distance (A) is greater than the minimum distance (Amin) and less than the maximum distance (Amax),
**characterized in that** at least one of the two vehicles (F1, F2) transmits information on an intended driving movement and/or movement change and carries out this driving movement and/or movement change with a specified or specifiable delay in order to compensate a reaction time of the respectively other vehicle (F1, F2).

2. The method according to claim 1, **characterized in that** the first vehicle (F1) moves or is to be moved along a first route (R1) and the second vehicle (F2) moves or is to be moved along a second route (R2), and the method furthermore comprises the following steps:
- changing (S102) the first route (R1) and changing (S103) the second route (R2) in such a way that both changed routes (R1', R2') coincide at least along a route section (RA) or along an extended route section;
- steering (S104) the first vehicle (F1) along the changed first route (R1') and the second vehicle (F2) along the changed second route (R2') in such a way that the two vehicles (F1, F2) move along the coinciding route section (RA) at a distance (A) to each other that is less than a specified maximum distance,
wherein during the step of transmitting (S106) electric energy from the energy accumulator (10) of the first vehicle (F1) to the energy accumulator (10) of the second vehicle (F2) electric energy is transmitted while both vehicles (F1, F2) move along the coinciding route section (RA), wherein optionally both vehicles (F1, F2) are configured as autonomously driving vehicles, and/or that the steering (S104) of the vehicles (F1, F2) along the changed routes (R1', R2') comprises braking, accelerating and/or stopping of the first and/or the second vehicle (F1, F2).

3. The method according to any of claims 1 and 2, **characterized in that** a third vehicle (F3) is located in a space between the first and the second vehicle (F1, F2) and the transmission (S106) of electric energy from the energy accumulator (10) of the first vehicle (F1) to the energy accumulator (10) of the second vehicle (F2) is effected by the third vehicle (F3), and/or that a third vehicle (F3) is located in a space between the first and the second vehicle (F1, F2), and before the step of transmitting (S106) electric energy the method comprises the following step:
- steering (S105) the third vehicle (F3) in such a way that it is removed from the space between the first and the second vehicle (F1, F2), in particular by initiating an overtaking maneuver by transmitting at least one command to the first, the second and/or the third vehicle (F1-F3).

4. The method according to any of the previous claims, **characterized in that** the transmitted information comprises an actual driving state, a target driving state and/or an expected driving state.

5. The method according to any of the previous claims, **characterized in that** both information with respect to a driving state of the first vehicle (F1) is transmitted to the second vehicle (F2) and information with respect to a driving state of the second vehicle (F2) is transmitted to the first vehicle (F1), and the regulation (S204) of the distance (A) between the vehicles (F1, F2) is effected by steering the first and the second vehicle (F1, F2) based on the transmitted information.

6. The method according to any of the previous claims, **characterized in that** the transmission (S106) of electric energy from the energy accumulator (10) of the first vehicle (F1) to the energy accumulator (10) of the second vehicle (F2) is effected via a coupling device (13F) that transmits energy in the form of light, in particular in the form of a laser beam (L1), wherein optionally a plurality of light barriers are arranged around the laser beam (L1).

7. A system (1) for exchanging electric energy between at least two moving, electrically driven vehicles (F1, F2) according to claim 14, comprising:
- an electrically driven first vehicle (F1) that comprises an electric energy accumulator (10), wherein by means of energy stored therein the first vehicle (F1) can be driven electrically;
- an electrically driven second vehicle (F2) that comprises an electric energy accumulator (10), wherein by means of energy stored therein the second vehicle (F2) can be driven electrically; and
- means for carrying out the following steps:
∘ steering (S202) the first vehicle (F1) along a first route (R1) and the second vehicle (F2) along a second route (R2) in such a way that the two vehicles (F1, F2) move at a distance (A) to each other at least along a coinciding route section (RA);
∘ transmitting (S203) information with respect to a driving state of the first vehicle (F1) from the first vehicle (F1) to the second vehicle (F2) and/or information with respect to a driving state of the second vehicle (F2) from the second vehicle (F2) to the first vehicle (F1);
∘ regulating (S204) the distance (A) between the vehicles (F1, F2) by steering the first and/or the second vehicle (F1, F2) based on the transmitted information in such a way that during the movement of the two vehicles (F1, F2) the distance (A) is greater than a specified minimum distance (Amin) and less than a specified maximum distance (Amax); and
∘ transmitting (S106) electric energy from the energy accumulator (10) of the first vehicle (F1) to the energy accumulator (10) of the second vehicle (F2), while during the movement of the two vehicles (F1, F2) the distance (A) is greater than the minimum distance (Amin) and less than the maximum distance (Amax),
**characterized in that** at least one of the two vehicles (F1, F2) is adapted to transmit information on an intended driving movement and/or movement change and to carry out this driving movement and/or movement change with a specified or specifiable delay in order to compensate a reaction time of the respectively other vehicle (F1, F2).

8. The system (1) according to claim 7, comprising:
- a coupling device (13B-13C; 13E) for transmitting electric energy between the energy accumulator (10) of the first vehicle (F1) and the energy accumulator (10) of the second vehicle (F2) by electrically coupling a first coupling element (14B-14C; 14E) of the coupling device (13B-13C; 13E), which is fixed to the first vehicle (F1), with a second coupling element (15B-15C; 15E) of the coupling device (13B-13C), which is fixed to the second vehicle (F2),
wherein at least one of the two coupling elements (14B-14C; 14E, 15B-15C; 15E) comprises an arm (150; 150') movable with respect to the vehicle (F1, F2) to which it is fixed, which arm is configured to at least partly bridge a distance (A) between the two vehicles (F1, F2) up to a specified maximum distance (Amax).

9. The system (1) according to claim 8, **characterized in that** the two coupling elements (14B-14C; 14E, 15B-15C; 15E) can be interlocked magnetically and/or mechanically.

10. The system (1) according to any of claims 8 or 9, **characterized in that** the coupling device (13B-13C; 13E) comprises a drive (17; 181-183) that is configured to move the arm (150; 150') in dependence on a distance (A) between the two vehicles (F1, F2) and/or on forces and/or accelerations acting on the arm (150; 150').

11. The system (1) according to any of claims 8 to 10, **characterized in that** the arm (150') comprises at least one pneumatic muscle (181).

12. The system (1) according to any of claims 8 to 11, **characterized in that** the coupling device (13B-13C; 13E) comprises at least one sensor (16) for measuring forces and/or accelerations acting on the arm (150; 150') and a drive (17; 181-183) for moving the arm (150; 150'), wherein the coupling device (13B-13C; 13E) is configured to actuate the drive (17; 181-183) in dependence on at least one value provided by the sensor (16).

13. The system (1) according to claim 7, comprising:
- a coupling device (13D) for transmitting electric energy between the energy accumulator (10) of the first vehicle (F1) and the energy accumulator (10) of the second vehicle (F2) by inductive electric coupling of a first coupling element (14D) of the coupling device (13D), which is fixed to the first vehicle (F1), with a second coupling element (15D) of the coupling device (13D), which is fixed to the second vehicle (F2),
wherein the first and/or the second coupling element (14D, 15D) comprises/comprise a plurality of induction coils (140, 152) that are arranged along a concave or convex section of a vehicle front (FF) or a vehicle rear (FH) of the first and/or second vehicle (F1, F2), wherein optionally the first coupling element (14D) comprises a plurality of induction coils (140) that are arranged along a concave section of the vehicle rear (FH) of the first vehicle (F1), and the second coupling element (15D) comprises a plurality of induction coils (152) that are arranged along a convex section of the vehicle front (FF) of the second vehicle (F2).

14. An electrically driven vehicle (F1, F2) comprising an energy accumulator (10), wherein by means of energy stored therein the vehicle (F1, F2) can be driven electrically, and a first coupling element (14A-14F) and/or a second coupling element (15A-15F) of a coupling device (13A-13F) for transmitting electric energy between the energy accumulator (10) of the vehicle (F1, F2) and an energy accumulator (10) of a further vehicle (F1, F2), wherein the vehicle (F1, F2) is configured and adapted for carrying out the following steps:
- steering (S202) the vehicle (F1) along a first route (R1) in such a way that the vehicles (F1, F2) and the further vehicle (F1, F2) steered along a second route (R2) move at a distance (A) to each other at least along a coinciding route section (RA);
- transmitting (S203) information with respect to a driving state of the vehicle (F1, F2) from the vehicle (F1, F2) to the further vehicle (F1, F2);
- regulating (S204) the distance (A) between the vehicles (F1, F2) by steering the vehicle (F1, F2) based on the transmitted information in such a way that during the movement of the two vehicles (F1, F2) the distance (A) is greater than a specified minimum distance (Amin) and less than a specified maximum distance (Amax); and
- transmitting (S106) electric energy from the energy accumulator (10) of the vehicle (F1) to the energy accumulator (10) of the further vehicle (F2), while during the movement of the two vehicles (F1, F2) the distance (A) is greater than the minimum distance (Amin) and less than the maximum distance (Amax),
**characterized in that** the vehicle (F1, F2) transmits information on an intended driving movement and/or movement change and carries out this driving movement and/or movement change with a specified or specifiable delay in order to compensate a reaction time of the further vehicle (F1, F2).

## Revendications

1. Procédé pour l'échange d'énergie électrique entre au moins deux véhicules à propulsion électrique en mouvement (F1, F2), comprenant les étapes suivantes :
- fournir (S100 ; S200) un premier véhicule (F1) à propulsion électrique, qui comprend un accumulateur d'énergie électrique (10), le premier véhicule (F1) pouvant être entraîné électriquement au moyen de l'énergie qui y est stockée, l'accumulateur d'énergie (10) pouvant fournir de l'énergie électrique ;
- fournir (S101 ; S201) un deuxième véhicule (F2) à propulsion électrique, qui comprend un accumulateur d'énergie électrique (10), le deuxième véhicule (F2) pouvant être entraîné électriquement au moyen de l'énergie qui y est stockée, l'accumulateur d'énergie (10) pouvant absorber de l'énergie électrique ;
- conduire (S202) le premier véhicule (F1) le long d'une première route (R1) et le deuxième véhicule (F2) le long d'une deuxième route (R2) de telle sorte que les deux véhicules (F1, F2) se déplacent à une distance (A) l'un de l'autre au moins le long d'une section de route coïncidente (RA) ;
- transmettre (S203) des informations concernant un état de conduite du premier véhicule (F1) depuis le premier véhicule (F1) au deuxième véhicule (F2) et/ou des informations concernant un état de conduite du deuxième véhicule (F2) depuis le deuxième véhicule (F2) au premier véhicule (F1) ;
- régulation (S204) de la distance (A) entre les véhicules (F1, F2) en conduisant le premier et/ou le deuxième véhicule (F1, F2) sur la base des informations transmises de telle sorte que la distance (A) soit supérieure à une distance minimale prédéfinie (Amin) et inférieure à une distance maximale prédéfinie (Amax) pendant le déplacement des deux véhicules (F1, F2) ; et
- transférer (S106) de l'énergie électrique de l'accumulateur d'énergie (10) du premier véhicule (F1) à l'accumulateur d'énergie (10) du deuxième véhicule (F2) alors que la distance (A) lors du déplacement des deux véhicules (F1, F2) est supérieure à la distance minimale (Amin) et inférieure à la distance maximale (Amax),
**caractérisé en ce qu'**au moins l'un des deux véhicules (F1, F2) transmet des informations sur un mouvement de déplacement et/ou un changement de mouvement envisagé et exécute ce mouvement de déplacement et/ou ce changement de mouvement avec un retard prédéfini ou prédéfinissable, afin de compenser un temps de réaction de l'autre véhicule respectif (F1, F2).

2. Procédé selon la revendication 1, **caractérisé en ce que** le premier véhicule (F1) se déplace ou doit être déplacé le long d'une première route (R1) et le deuxième véhicule (F2) se déplace ou doit être déplacé le long d'une deuxième route (R2), et le procédé comprend en outre les étapes suivantes :
- modifier (S102) la première route (R1) et modifier (S103) la deuxième route (R2) de telle sorte que les deux routes modifiées (R1', R2') coïncident au moins le long d'une section de route (RA) ou le long d'une section de route prolongé ;
- conduire (S104) le premier véhicule (F1) le long de la première route modifiée (R1') et le deuxième véhicule (F2) le long de la deuxième route modifiée (R2') de telle sorte que les deux véhicules (F1, F2) se déplacent le long de la section de route coïncidente (RA) à une distance (A) l'un de l'autre qui est inférieure à une distance maximale prédéfinie ;
dans lequel pendant l'étape de transfert (S106) d'énergie électrique de l'accumulateur d'énergie (10) du premier véhicule (F1) à l'accumulateur d'énergie (10) du deuxième véhicule (F2) de l'énergie électrique est transférée pendant que les deux véhicules (F1, F2) se déplacent le long de la section de route coïncidente (RA), où optionnellement les deux véhicules (F1, F2) sont conçus comme des véhicules à conduite autonome et/ou **en ce que** la conduite (S104) des véhicules (F1, F2) le long les routes modifiées (R1', R2') comprend un freinage, une accélération et/ou un arrêt du premier et/ou du deuxième véhicule (F1, F2).

3. Procédé selon l'une quelconque des revendications 1 et 2, **caractérisé en ce qu'**un troisième véhicule (F3) se trouve dans un espace entre le premier et le deuxième véhicule (F1, F2) et le transfert (S106) d'énergie électrique de l'accumulateur d'énergie (10) du premier véhicule (F1) à l'accumulateur d'énergie (10) du deuxième véhicule (F2) est effectué par le troisième véhicule (F3), et/ou **en ce qu'**un troisième véhicule (F3) se trouve dans un espace entre le premier et le deuxième véhicule (F1, F2) et le procédé comprend l'étape suivante avant l'étape de transfert (S106) d'énergie électrique :
- conduire (S105) le troisième véhicule (F3) de telle sorte qu'il est enlevé de l'espace entre le premier et le deuxième véhicule (F1, F2), en particulier en initiant une opération de dépassement par transmission d'au moins une commande au premier, au deuxième et/ou au troisième véhicule (F1-F3).

4. Procédé selon l'une quelconque des revendications précédentes, **caractérisé en ce que** les informations transmises comprennent un état de conduite actuel, un état de conduite cible et/ou un état de conduite attendu.

5. Procédé selon l'une quelconque des revendications précédentes, **caractérisé en ce que** des informations concernant un état de conduite du premier véhicule (F1) sont transmises au deuxième véhicule (F2), de même que des informations concernant un état de conduite du deuxième véhicule (F2) sont transmises au premier véhicule (F1), et la régulation (S204) de la distance (A) entre les véhicules (F1, F2) est effectuée en conduisant le premier et le deuxième véhicule (F1, F2) sur la base des informations transmises.

6. Procédé selon l'une quelconque des revendications précédentes, **caractérisé en ce que** le transfert (S106) d'énergie électrique de l'accumulateur d'énergie (10) du premier véhicule (F1) à l'accumulateur d'énergie (10) du deuxième véhicule (F2) est effectué par l'intermédiaire d'un dispositif de couplage (13F) qui transmet de l'énergie sous forme de lumière, en particulier sous forme d'un faisceau laser (L1), plusieurs barrières lumineuses étant optionnellement agencées autour du faisceau laser (L1).

7. Système (1) pour l'échange d'énergie électrique entre au moins deux véhicules à propulsion électrique en mouvement (F1, F2) selon la revendication 14, comprenant :
- un premier véhicule (F1) à propulsion électrique, qui comprend un accumulateur d'énergie électrique (10), le premier véhicule (F1) pouvant être entraîné électriquement au moyen de l'énergie qui y est stockée ;
- un deuxième véhicule (F2) à propulsion électrique, qui comprend un accumulateur d'énergie électrique (10), le deuxième véhicule (F2) pouvant être entraîné électriquement au moyen de l'énergie qui y est stockée ; et
- des moyens pour réaliser les étapes suivantes :
∘ conduire (S202) le premier véhicule (F1) le long d'une première route (R1) et le deuxième véhicule (F2) le long d'une deuxième route (R2) de telle sorte que les deux véhicules (F1, F2) se déplacent à une distance (A) l'un de l'autre au moins le long d'une section de route (RA) coïncidente;
∘ transmettre (S203) des informations concernant un état de conduite du premier véhicule (F1) depuis le premier véhicule (F1) au deuxième véhicule (F2) et/ou des informations concernant un état de conduite du deuxième véhicule (F2) depuis le deuxième véhicule (F2) au premier véhicule (F1) ;
∘ régulation (S204) de la distance (A) entre les véhicules (F1, F2) en conduisant le premier et/ou le deuxième véhicule (F1, F2) sur la base des informations transmises de telle sorte que la distance (A) soit supérieure à une distance minimale prédéfinie (Amin) et inférieure à une distance maximale prédéfinie (Amax) pendant le déplacement des deux véhicules (F1, F2) ; et
∘ transférer (S106) de l'énergie électrique de l'accumulateur d'énergie (10) du premier véhicule (F1) à l'accumulateur d'énergie (10) du deuxième véhicule (F2) alors que la distance (A) lors du déplacement des deux véhicules (F1, F2) est supérieure à la distance minimale (Amin) et inférieure à la distance maximale (Amax),
**caractérisé en ce qu'**au moins l'un des deux véhicules (F1, F2) est adapté à transmettre des informations sur un mouvement de déplacement et/ou un changement de mouvement envisagé et à exécuter ce mouvement de déplacement et/ou ce changement de mouvement avec un retard prédéfini ou prédéfinissable, afin de compenser un temps de réaction de l'autre véhicule respectif (F1, F2).

8. Système (1) selon la revendication 7, comprenant :
- un dispositif de couplage (13B-13C ; 13E) pour transférer de l'énergie électrique entre l'accumulateur d'énergie (10) du premier véhicule (F1) et l'accumulateur d'énergie (10) du deuxième véhicule (F2) par un couplage électrique d'un premier élément de couplage (14B-14C ; 14E) du dispositif de couplage (13B-13C ; 13E) fixé au premier véhicule (F1) avec un deuxième élément de couplage (15B-15C ; 15E) du dispositif de couplage (13B-13C) fixé au deuxième véhicule (F2),
dans lequel au moins l'un des deux éléments de couplage (14B-14C ; 14E, 15B-15C ; 15E) comprend un bras (150 ; 150') mobile par rapport au véhicule (F1, F2) auquel il est fixé, qui est conçu pour couvrir au moins partiellement une distance (A) entre les deux véhicules (F1, F2) jusqu'à une distance maximale prédéfinie (Amax).

9. Système (1) selon la revendication 8, **caractérisé en ce que** les deux éléments de couplage (14B-14C ; 14E, 15B-15C ; 15E) peuvent être verrouillés magnétiquement et/ou mécaniquement l'un à l'autre.

10. Système (1) selon l'une quelconque des revendications 8 ou 9, **caractérisé en ce que** le dispositif de couplage (13B-13C ; 13E) comprend un mécanisme d'entraînement (17 ; 181-183), qui est conçu pour déplacer le bras (150 ; 150') en dépendance d'une distance (A) entre les deux véhicules (F1, F2) et/ou de forces et/ou d'accélérations agissant sur le bras (150 ; 150').

11. Système (1) selon l'une quelconque des revendications 8 à 10, **caractérisé en ce que** le bras (150') comprend au moins un muscle pneumatique (181).

12. Système (1) selon l'une quelconque des revendications 8 à 11, **caractérisé en ce que** le dispositif de couplage (13B-13C ; 13E) comprend au moins un capteur (16) pour mesurer des forces et/ou des accélérations agissant sur le bras (150 ; 150') et un mécanisme d'entraînement (17 ; 181-183) pour déplacer le bras (150 ; 150'), le dispositif de couplage (13B-13C ; 13E) étant conçu pour actionner le mécanisme d'entraînement (17 ; 181-183) en dépendance d'au moins une valeur fournie par le capteur (16).

13. Système (1) selon la revendication 7, comprenant :
- un dispositif de couplage (13D) pour transférer de l'énergie électrique entre l'accumulateur d'énergie (10) du premier véhicule (F1) et l'accumulateur d'énergie (10) du deuxième véhicule (F2) par un couplage électrique inductive d'un premier élément de couplage (140) du dispositif de couplage (13D) fixé au premier véhicule (F1) avec un deuxième élément de couplage (15D) du dispositif de couplage (13D) fixé au deuxième véhicule (F2),
dans lequel le premier et/ou le deuxième élément de couplage (14D, 15D) comprend/comprennent plusieurs bobines d'induction (140, 152) qui sont agencées le long d'une partie concave ou convexe d'un avant de véhicule (FF) ou d'un arrière de véhicule (FH) du premier et/ou du deuxième véhicule (F1, F2), le premier élément de couplage (14D) comprenant optionnellement plusieurs bobines d'induction (140), qui sont agencées le long d'une partie concave de l'arrière de véhicule (FH) du premier véhicule (F1), et le deuxième élément de couplage (15D) comprend plusieurs bobines d'induction (152) qui sont agencées le long d'une partie convexe de l'avant de véhicule (FF) du deuxième véhicule (F2).

14. Véhicule à propulsion électrique (F1, F2) comprenant un accumulateur d'énergie électrique (10), le véhicule (F1, F2) pouvant être entraîné électriquement au moyen de l'énergie qui y est stockée, et un premier élément de couplage (14A-14F) et/ou un deuxième élément de couplage (15A-15F) d'un dispositif de couplage (13A-13F) pour transférer de l'énergie électrique entre l'accumulateur d'énergie (10) du véhicule (F1, F2) et un accumulateur d'énergie (10) d'un autre véhicule (F1, F2), le véhicule (F1, F2) étant conçu et adapté pour exécuter les étapes suivantes :
- conduire (S202) le véhicule (F1) le long d'une première route (R1) de telle sorte que le véhicule (F1, F2) et l'autre véhicule (F1, F2) conduit le long d'une deuxième route (R2) se déplacent à une distance (A) l'un de l'autre au moins le long d'une section de route coïncidente (RA) ;
- transmettre (S203) des informations concernant un état de conduite du véhicule (F1, F2) depuis le véhicule (F1, F2) à l'autre véhicule (F1, F2) ;
- régulation (S204) de la distance (A) entre les véhicules (F1, F2) en conduisant le véhicule (F1, F2) sur la base des informations transmises de telle sorte que la distance (A) soit supérieure à une distance minimale prédéterminée (Amin) et inférieure à une distance maximale prédéterminée (Amax) pendant le déplacement des deux véhicules (F1, F2) ; et
- transférer (S106) de l'énergie électrique de l'accumulateur d'énergie (10) du véhicule (F1, F2) à l'accumulateur d'énergie (10) de l'autre véhicule (F1, F2) alors que la distance (A) lors du déplacement des deux véhicules (F1, F2) est supérieure à la distance minimale (Amin) et inférieure à la distance maximale (Amax),
**caractérisé en ce que** le véhicule (F1, F2) transmet des informations sur un mouvement de déplacement et/ou un changement de mouvement envisagé et exécute ce mouvement de déplacement et/ou ce changement de mouvement avec un retard prédéfini ou prédéfinissable, afin de compenser un temps de réaction de l'autre véhicule (F1, F2).
